(19) **Europäisches Patentamt** / **European Patent Office** / **Office européen des brevets**

(11) **EP 4 580 186 A1**

(12) **EUROPEAN PATENT APPLICATION**
published in accordance with Art. 153(4) EPC

(43) Date of publication:
02.07.2025 Bulletin 2025/27

(21) Application number: 23857777.9

(22) Date of filing: 25.08.2023

(51) International Patent Classification (IPC):
H04N 19/593 (2014.01)     H04N 19/11 (2014.01)
H04N 19/132 (2014.01)     H04N 19/176 (2014.01)
H04N 19/70 (2014.01)

(52) Cooperative Patent Classification (CPC):
H04N 19/11; H04N 19/132; H04N 19/176;
H04N 19/593; H04N 19/70

(86) International application number:
PCT/KR2023/012625

(87) International publication number:
WO 2024/043745 (29.02.2024 Gazette 2024/09)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 25.08.2022 KR 20220106542

(71) Applicant: LG Electronics Inc.
Yeongdeungpo-gu
Seoul 07336 (KR)

(72) Inventors:
• HONG, Myungoh
  Seoul 06772 (KR)
• YOO, Sunmi
  Seoul 06772 (KR)
• LIM, Jaehyun
  Seoul 06772 (KR)

(74) Representative: Frenkel, Matthias Alexander
Wuesthoff & Wuesthoff
Patentanwälte und Rechtsanwalt PartG mbB
Schweigerstraße 2
81541 München (DE)

(54) **INTRA PREDICTION MODE-BASED IMAGE ENCODING/DECODING METHOD AND APPARATUS USING MULTI REFERENCE LINE (MRL), AND RECORDING MEDIUM FOR STORING BITSTREAM**

(57) An image encoding/decoding method and apparatus are provided. The image decoding method may comprise obtaining a plurality of intra prediction modes and a plurality of reference sample lines of a current block, generating a plurality of prediction blocks of the current block based on the plurality of intra prediction modes and the plurality of reference sample lines, and generating a final prediction block of the current block based on a weighted sum of the plurality of prediction blocks.

FIG. 12

EP 4 580 186 A1

## Description

### Technical Field

The present disclosure relates to an image encoding/decoding method and apparatus and a recording medium for storing a bitstream, and, more particularly, to an image encoding/decoding method and apparatus based on a multi reference line (MRL) and a recording medium for storing a bitstream generated by the image encoding method/apparatus of the present disclosure.

### Background Art

Recently, demand for high-resolution and high-quality images such as high definition (HD) images and ultra high definition (UHD) images is increasing in various fields. As resolution and quality of image data are improved, the amount of transmitted information or bits relatively increases as compared to existing image data. An increase in the amount of transmitted information or bits causes an increase in transmission cost and storage cost.

Accordingly, there is a need for high-efficient image compression technology for effectively transmitting, storing and reproducing information on high-resolution and high-quality images.

### Disclosure

### Technical Problem

An object of the present disclosure is to provide an image encoding/decoding method and apparatus with improved encoding/decoding efficiency.

In addition, the present disclosure is to provide an image encoding/decoding method and apparatus for performing an intra prediction mode.

In addition, the present disclosure is to provide an image encoding/decoding method and apparatus for performing an intra prediction mode using a MRL (Multi Reference Line).

In addition, the present disclosure is to provide an image encoding/decoding method and apparatus for fusing a plurality of prediction blocks generated using an MRL.

In addition, an object of the present disclosure is to provide a non-transitory computer-readable recording medium storing a bitstream generated by an image encoding method or apparatus according to the present disclosure.

In addition, an object of the present disclosure is to provide a non-transitory computer-readable recording medium storing a bitstream received, decoded and used to reconstruct an image by an image decoding apparatus according to the present disclosure.

In addition, an object of the present disclosure is to provide a method of transmitting a bitstream generated by an image encoding method or apparatus according to the present disclosure.

The technical problems solved by the present disclosure are not limited to the above technical problems and other technical problems which are not described herein will become apparent to those skilled in the art from the following description.

### Technical Solution

According to an embodiment of the present disclosure, an image decoding method performed by an image decoding apparatus may comprise obtaining a plurality of intra prediction modes and a plurality of reference sample lines of a current block, generating a plurality of prediction blocks of the current block based on the plurality of intra prediction modes and the plurality of reference sample lines, and generating a final prediction block of the current block based on a weighted sum of the plurality of prediction blocks.

According to an embodiment of the present disclosure, the second prediction mode may be derived to be one of a predetermined mode or a most probable mode (MPM) candidate mode, based on information indicating a second intra prediction mode of the plurality of intra prediction modes being not obtained from a bitstream.

According to an embodiment of the present disclosure, based on an intra prediction mode of the current block and an intra prediction mode of a neighboring block, a second reference sample line among the plurality of reference sample lines may be determined based on a size of the neighboring block.

According to an embodiment of the present disclosure, based on there being two or more neighboring blocks having the same intra prediction mode as an intra prediction mode of the current block, a second reference sample line among the plurality of reference sample lines may be determined based on widths and heights of the neighboring blocks.

According to an embodiment of the present disclosure, the neighboring blocks may include a left neighboring block and an above neighboring block, based on a width of the left neighboring block being less than or equal to a height of the above neighboring block, the second reference sample line may be determined to be a reference sample line separated from the current block by a width of the left neighboring block, and based on the width of the left neighboring block being greater than the height of the above neighboring block, the second reference sample line may be determined to be a reference sample line separated from the current block by the height of the above neighboring block

According to an embodiment of the present disclosure, the weight may be determined based on at least one of a size of the current block, a shape of the current block, an intra prediction mode of the current block, a distance between the current block and a reference sample line or a template matching-based cost.

According to an embodiment of the present disclosure, the plurality of prediction blocks may include a first prediction block generated based on a first reference sample line and a second prediction block generated based on a second reference sample line, the first reference sample line may be located closer to the current block than the second reference sample line, and a first weight applied to the first prediction block may be less than a second weight applied to the second prediction block based on a size of the current block being greater than or equal to a threshold value and may be greater than the second weight based on the size of the current block being less than the threshold value.

According to an embodiment of the present disclosure, the plurality of prediction blocks may include a first prediction block generated based on a first reference sample line and a second prediction block generated based on a second reference sample line, the first reference sample line may be located closer to the current block than the second reference sample line, and a first weight applied to the first prediction block may be greater than a second weight applied to the second prediction block, based on an intra prediction mode of the current block being a DC mode or a planar mode.

According to an embodiment of the present disclosure, the plurality of prediction blocks may include a first prediction block generated using a directional prediction mode in a vertical direction and a second prediction block generated using a directional prediction mode in a horizontal direction, and a first weight applied to the first prediction block may be greater than a second weight applied to the second prediction block based on a width of the current block being greater than or equal to a height of the current block and may be less than the second weight based on the width of the current block being less than the height of the current block.

According to an embodiment of the present disclosure, the weight may be determined based on a distance between a position of a sample included in the current block and the reference sample line.

According to an embodiment of the present disclosure, the template matching-based cost may include a first template cost calculated based on the first sample line and a second template cost calculated based on the second reference sample line, and the weight may be determined based on comparison of the first template cost and the second template cost.

According to an embodiment of the present disclosure, an image encoding method performed by an image encoding apparatus may comprise obtaining a plurality of intra prediction modes and a plurality of reference sample lines of a current block, generating a plurality of prediction blocks of the current block based on the plurality of intra prediction modes and the plurality of reference sample lines, and generating a final prediction block of the current block based on a weighted sum of the plurality of prediction blocks.

According to an embodiment of the present disclosure, a computer-readable recording medium storing a bitstream generated by the image encoding method may be included.

According to an embodiment of the present disclosure, in a method of transmitting a bitstream generated by an image encoding method, the image encoding method may comprise obtaining a plurality of intra prediction modes and a plurality of reference sample lines of a current block, generating a plurality of prediction blocks of the current block based on the plurality of intra prediction modes and the plurality of reference sample lines, and generating a final prediction block of the current block based on a weighted sum of the plurality of prediction blocks.

**Advantageous Effects**

According to the present disclosure, it is possible to provide an image encoding/decoding method and apparatus with improved encoding/decoding efficiency.

In addition, according to the present disclosure, it is possible to provide an image encoding/decoding method and apparatus for performing an intra prediction mode.

In addition, according to the present disclosure, it is possible to provide an image encoding/decoding method and apparatus for performing an intra prediction mode using a MRL (Multi Reference Line).

In addition, the present disclosure is to provide an image encoding/decoding method and apparatus for fusing a plurality of prediction blocks generated using an MRL.

Also, according to the present disclosure, it is possible to provide a non-transitory computer-readable recording medium storing a bitstream generated by an image encoding method or apparatus according to the present disclosure.

Also, according to the present disclosure, it is possible to provide a non-transitory computer-readable recording medium storing a bitstream received, decoded and used to reconstruct an image by an image decoding apparatus according to the present disclosure.

Also, according to the present disclosure, it is possible to provide a method of transmitting a bitstream generated by an image encoding method or apparatus according to the present disclosure.

It will be appreciated by persons skilled in the art that that the effects that can be achieved through the present disclosure are not limited to what has been particularly described hereinabove and other advantages of the present disclosure will be more clearly understood from the detailed description.

**Description of Drawings**

FIG. 1 is a view schematically showing a video coding system, to which an embodiment of the present disclosure is applicable.

FIG. 2 is a view schematically showing an image encoding apparatus, to which an embodiment of the present disclosure is applicable.

FIG. 3 is a view schematically showing an image decoding apparatus, to which an embodiment of the present disclosure is applicable.

FIG. 4 is a flowchart illustrating an intra prediction based video/image encoding method.

FIG. 5 is a view illustrating a configuration of the intra prediction unit according to the present disclosure.

FIG. 6 is a flowchart illustrating an intra prediction based video/image decoding method.

FIG. 7 is a view illustrating a configuration of the intra prediction unit according to the present disclosure.

FIG. 8 is a diagram illustrating a template area and a reference sample used in TIMD according to the present disclosure.

FIG. 9 is a diagram illustrating a method of constructing a Histogram of Gradient (HoG) in a DIMD mode according to the present disclosure.

FIG. 10 is a diagram illustrating a method of constructing a prediction block when applying a DIMD mode according to the present disclosure.

FIG. 11 is a diagram illustrating a plurality of reference sample lines for fusing prediction blocks according to the present disclosure.

FIGS. 12 and 13 are flowcharts illustrating a method of signaling and obtaining an intra prediction mode and a reference sample line index according to the present disclosure.

FIGS. 14 to 17 are diagrams illustrating an example of a method of deriving a reference sample line according to the present disclosure.

FIGS. 18 to 21 are diagrams illustrating an example of determining a weight applied when fusing a plurality of prediction blocks according to the present disclosure.

FIG. 22 is a drawing illustrating a template area for obtaining a template cost according to the present disclosure.

FIG. 23 is a flowchart of an image encoding method according to the present disclosure.

FIG. 24 is a flowchart of an image decoding method according to the present disclosure.

FIG. 25 is a view showing a content streaming system to which an embodiment of the present disclosure is applicable.

**Mode for Invention**

Hereinafter, the embodiments of the present disclosure will be described in detail with reference to the accompanying drawings so as to be easily implemented by those skilled in the art. However, the present disclosure may be implemented in various different forms, and is not limited to the embodiments described herein.

In describing the present disclosure, if it is determined that the detailed description of a related known function or construction renders the scope of the present disclosure unnecessarily ambiguous, the detailed description thereof will be omitted. In the drawings, parts not related to the description of the present disclosure are omitted, and similar reference numerals are attached to similar parts.

In the present disclosure, when a component is "connected", "coupled" or "linked" to another component, it may include not only a direct connection relationship but also an indirect connection relationship in which an intervening component is present. In addition, when a component "includes" or "has" other components, it means that other components may be further included, rather than excluding other components unless otherwise stated.

In the present disclosure, the terms first, second, etc. may be used only for the purpose of distinguishing one component from other components, and do not limit the order or importance of the components unless otherwise stated. Accordingly, within the scope of the present disclosure, a first component in one embodiment may be referred to as a second component in another embodiment, and similarly, a second component in one embodiment may be referred to as a first component in another embodiment.

In the present disclosure, components that are distinguished from each other are intended to clearly describe each feature, and do not mean that the components are necessarily separated. That is, a plurality of components may be integrated and implemented in one hardware or software unit, or one component may be distributed and implemented in a plurality of hardware or software units. Therefore, even if not stated otherwise, such embodiments in which the components are integrated or the component is distributed are also included in the scope of the present disclosure.

In the present disclosure, the components described in various embodiments do not necessarily mean essential components, and some components may be optional components. Accordingly, an embodiment consisting of a subset of components described in an embodiment is also included in the scope of the present disclosure. In addition, embodiments including other components in addition to components described in the various embodiments are included in the scope of the present disclosure.

The present disclosure relates to encoding and decoding of an image, and terms used in the present disclosure may have a general meaning commonly used in the technical field, to which the present disclosure belongs, unless newly defined in the present disclosure.

In the present disclosure, a "video" may mean a set of images over time.

In the present disclosure, "picture" generally means the basis representing one image in a particular time period, and a slice/tile is an encoding basis constituting a part of a picture. One picture may be composed of one or more slices/tiles. In addition, a slice/tile may include one or more coding tree units (CTUs).

In the present disclosure, a "pixel" or a "pel" may mean a smallest unit constituting one picture (or image). In addition, "sample" may be used as a term corresponding to a pixel. A sample may generally represent a pixel or a value of a pixel, and may represent only a pixel/pixel value of a luma component or only a pixel/pixel value of a chroma component.

In the present disclosure, a "unit" may represent a basic unit of image processing. The unit may include at least one of a specific region of the picture and information related to the region. One unit may include one luma block and two chroma (e.g., Cb, Cr) blocks. The unit may be used interchangeably with terms such as "sample array", "block" or "area" in some cases. In a general case, an $M \times N$ block may include samples (or sample arrays) or a set (or array) of transform coefficients of M columns and N rows.

In the present disclosure, "current block" may mean one of "current coding block", "current coding unit", "coding target block", "decoding target block" or "processing target block". When prediction is performed, "current block" may mean "current prediction block" or "prediction target block". When transform (inverse transform)/quantization (dequantization) is performed, "current block" may mean "current transform block" or "transform target block". When filtering is performed, "current block" may mean "filtering target block".

In addition, in the present disclosure, a "current block" may mean a block including both a luma component block and a chroma component block or "a luma block of a current block" unless explicitly stated as a chroma block. The luma component block of the current block may be expressed by including an explicit description of a luma component block such as "luma block" or "current luma block. In addition, the "chroma component block of the current block" may be expressed by including an explicit description of a chroma component block, such as "chroma block" or "current chroma block".

In the present disclosure, the term "/" and "," should be interpreted to indicate "and/or". For instance, the expression "A/B" and "A, B" may mean "A and/or B." Further, "A/B/C" and "A, B, C" may mean "at least one of A, B, and/or C."

In the present disclosure, the term "or" should be interpreted to indicate "and/or." For instance, the expression "A or B" may comprise 1) only "A", 2) only "B", and/or 3) both "A and B". In other words, in the present disclosure, the term "or" should be interpreted to indicate "additionally or alternatively."

In the present disclosure, "at least one of A, B, and C" may mean "only A," "only B," "only C," or "any and all combinations of A, B, and C." In addition, "at least one A, B or C" or "at least one A, B and/or C" may mean "at least one A, B and C."

Parentheses used in the present disclosure may mean "for example." For example, if "prediction (intra prediction)" is indicated, "intra prediction" may be proposed as an example of "prediction." In other words, "prediction" in the present disclosure is not limited to "intra prediction," and "intra prediction" may be proposed as an example of "prediction." In addition, even when "prediction (i.e., intra prediction)" is indicated, "intra prediction" may be proposed as an example of "prediction."

## Overview of video coding system

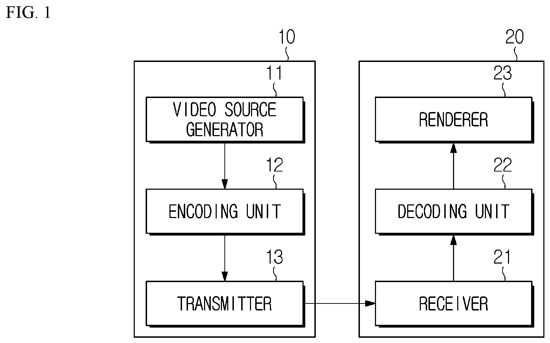

FIG. 1 is a view schematically showing a video coding system to which an embodiment of the present disclosure is applicable.

The video coding system according to an embodiment may include an encoding device 10 and a decoding device 20. The encoding device 10 may deliver encoded video and/or image information or data to the decoding device 20 in the form of a file or streaming via a digital storage medium or network.

The encoding device 10 according to an embodiment may include a video source generator 11, an encoder 12 and a transmitter 13. The decoding device 20 according to an embodiment may include a receiver 21, a decoder 22 and a renderer 23. The encoder 12 may be called a video/image encoding apparatus, and the decoder 22 may be called a video/image decoding apparatus. The transmitter 13 may be included in the encoder 12. The receiver 21 may be included in the decoder 22. The renderer 23 may include a display and the display may be configured as a separate device or an external component.

The video source generator 11 may acquire a video/image through a process of capturing, synthesizing or generating the video/image. The video source generator 11 may include a video/image capture device and/or a video/-image generating device. The video/image capture device may include, for example, one or more cameras, video/image archives including previously captured video/images, and the like. The video/image generating device may include, for example, computers, tablets and smartphones, and may (electronically) generate video/images. For example, a virtual video/image may be generated through a computer or the like. In this case, the video/image capturing process may be replaced by a process of generating related data.

The encoder 12 may encode an input video/image. The encoder 12 may perform a series of procedures such as prediction, transform, and quantization for compression and coding efficiency. The encoder 12 may output encoded data (encoded video/image information) in the form of a bitstream.

The transmitter 13 may transmit the encoded video/image information or data output in the form of a bitstream to the receiver 21 of the decoding device 20 through a digital storage medium or a network in the form of a file or streaming. The digital storage medium may include various storage mediums such as USB, SD, CD, DVD, Blu-ray, HDD, SSD, and the like. The transmitter 13 may include an element for generating a media file through a predetermined file format and may include an element for transmission through a broadcast/communication network. The transmitter 13 may be provided as a separate transmission device from the encoder 120. In this case, the transmission device includes at least one processor that acquires encoded video/image information or data output in the form of a bitstream and a transmitter that delivers it in the form of a file or streaming. The receiver 21 may extract/receive the bitstream from the storage medium or network and transmit the bitstream to the decoder 22.

The decoder 22 may decode the video/image by performing a series of procedures such as dequantization, inverse transform, and prediction corresponding to the operation of the encoder 12.

The renderer 23 may render the decoded video/image. The rendered video/image may be displayed through the display.

## Overview of image encoding apparatus

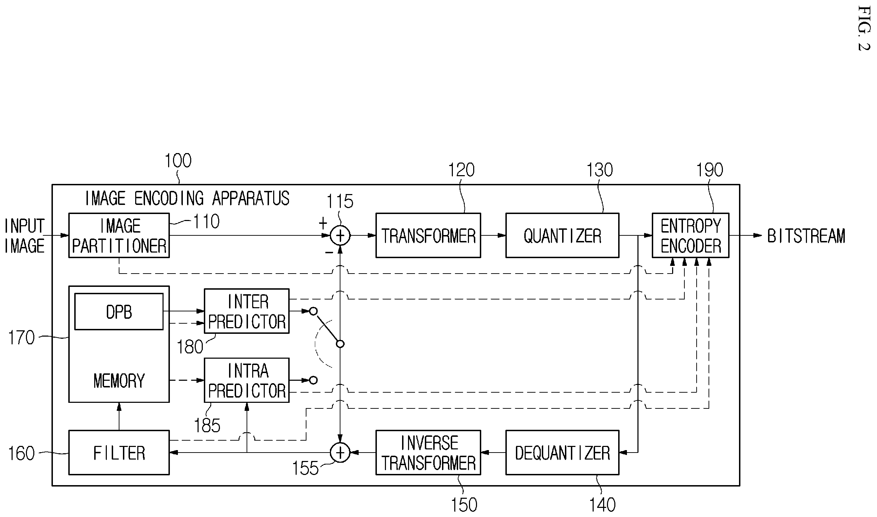

FIG. 2 is a view schematically showing an image encoding apparatus, to which an embodiment of the present disclosure is applicable.

As shown in FIG. 2, the image encoding apparatus 100 may include an image partitioner 110, a subtractor 115, a transformer 120, a quantizer 130, a dequantizer 140, an inverse transformer 150, an adder 155, a filter 160, a memory 170, an inter prediction unit 180, an intra prediction unit 185 and an entropy encoder 190. The inter prediction unit 180 and the intra prediction unit 185 may be collectively referred to as a "prediction unit". The transformer 120, the quantizer 130, the dequantizer 140 and the inverse transformer 150 may be included in a residual processor. The residual processor may further include the subtractor 115.

All or at least some of the plurality of components configuring the image encoding apparatus 100 may be configured by one hardware component (e.g., an image encoding apparatus 100 or a processor) in some embodiments. In addition, the memory 170 may include a decoded picture buffer (DPB) and may be configured by a digital storage medium.

The image partitioner 110 may partition an input image (or a picture or a frame) input to the image encoding apparatus 100 into one or more processing units. For example, the processing unit may be called a coding unit (CU). The coding unit may be acquired by recursively partitioning a coding tree unit (CTU) or a largest coding unit (LCU) according to a quad-tree binary-tree ternary-tree (QT/BT/TT) structure. For example, one coding unit may be partitioned into a plurality of coding units of a deeper depth based on a quad tree structure, a binary tree structure, and/or a ternary structure. For partitioning of the coding unit, a quad tree structure may be applied first and the binary tree structure and/or ternary structure may be applied later. The coding procedure according to the present disclosure may be performed based on the final coding unit that is no longer partitioned. The largest coding unit may be used as the final coding unit or the coding unit of deeper depth acquired by partitioning the largest coding unit may be used as the final coding unit. Here, the coding procedure may include a procedure of prediction, transform, and reconstruction, which will be described later. As another example, the processing unit of the coding procedure may be a prediction unit (PU) or a transform unit (TU). The prediction unit and the transform unit may be split or partitioned from the final coding unit. The prediction unit may be a unit of sample prediction, and the transform unit may be a unit for deriving a transform coefficient and/or a unit for deriving a residual signal from the transform coefficient.

The prediction unit (the inter prediction unit 180 or the intra prediction unit 185) may perform prediction on a block to be processed (current block) and generate a predicted block including prediction samples for the current block. The prediction unit may determine whether intra prediction or inter prediction is applied on a current block or CU basis. The prediction unit may generate various information related to prediction of the current block and transmit the generated information to the entropy encoder 190. The information on the prediction may be encoded in the entropy encoder 190 and output in the form of a bitstream.

The intra prediction unit 185 may predict the current block by referring to the samples in the current picture. The referred samples may be located in the neighborhood of the current block or may be located apart according to the intra prediction mode and/or the intra prediction technique. The intra prediction modes may include a plurality of non-angular modes and a plurality of directional modes. The non-directional mode may include, for example, a DC mode and a planar mode. The directional mode may include, for example, 33 directional prediction modes or 65 directional prediction modes according to the degree of detail of the prediction direction. However, this is merely an example, more or less directional prediction modes may be used depending on a setting. The intra prediction unit 185 may determine the prediction mode applied to the current block by using a prediction mode applied to a neighboring block.

The inter prediction unit 180 may derive a predicted block for the current block based on a reference block (reference sample array) specified by a motion vector on a reference picture. In this case, in order to reduce the amount of motion information transmitted in the inter prediction mode, the motion information may be predicted in units of blocks, subblocks, or samples based on correlation of motion information between the neighboring block and the current block. The motion information may include a motion vector and a reference picture index. The motion information may further include inter prediction direction (L0 prediction, L1 prediction, Bi prediction, etc.) information. In the case of inter prediction, the neighboring block may include a spatial neighboring block present in the current picture and a temporal neighboring block present in the reference picture. The reference picture including the reference block and the reference picture including the temporal neighboring block may be the same or different. The temporal neighboring block may be called a collocated reference block, a co-located CU (colCU), and the like. The reference picture including the temporal neighboring block may be called a collocated picture (colPic). For example, the inter prediction unit 180 may configure a motion information candidate list based on neighboring blocks and generate information indicating which candidate is used to derive a motion vector and/or a reference picture index of the current block. Inter prediction may be performed based on various prediction modes. For example, in the case of a skip mode and a merge mode, the inter prediction unit 180 may use motion information of the neighboring block as motion information of the current block. In the case of the skip mode, unlike the merge mode, the residual signal may not be transmitted. In the case of the motion vector prediction (MVP) mode, the motion vector of the neighboring block may be used as a motion vector predictor, and the motion vector of the current block may be signaled by encoding a motion vector difference and an indicator for a motion vector predictor. The motion vector difference may mean a difference between the motion vector of the current block and the motion vector predictor.

The prediction unit may generate a prediction signal based on various prediction methods and prediction techniques described below. For example, the prediction unit may not only apply intra prediction or inter prediction but also simultaneously apply both intra prediction and inter prediction, in order to predict the current block. A prediction method of simultaneously applying both intra prediction and inter prediction for prediction of the current block may be called combined inter and intra prediction (CIIP). In addition, the prediction unit may perform intra block copy (IBC) for prediction of the current block. Intra block copy may be used for content image/video coding of a game or the like, for example, screen content coding (SCC). IBC is a method of predicting a current picture using a previously reconstructed reference block in the current picture at a location apart from the current block by a predetermined distance. When IBC is applied, the location of the reference block in the current picture may be encoded as a vector (block vector) corresponding to the predetermined distance. IBC basically performs prediction in the current picture, but may be performed similarly to inter prediction in that a reference block is derived within the current picture. That is, IBC may use at least one of the inter prediction techniques described in the present disclosure.

The prediction signal generated by the prediction unit may be used to generate a reconstructed signal or to generate a residual signal. The subtractor 115 may generate a residual signal (residual block or residual sample array) by subtracting the prediction signal (predicted block or prediction sample array) output from the prediction unit from the input image signal (original block or original sample array). The generated residual signal may be transmitted to the transformer 120.

The transformer 120 may generate transform coefficients by applying a transform technique to the residual signal. For example, the transform technique may include at least one of a discrete cosine transform (DCT), a discrete sine transform (DST), a karhunen-loève transform (KLT), a graph-based transform (GBT), or a conditionally non-linear transform (CNT). Here, the GBT means transform obtained from a graph when relationship information between pixels is represented by the graph. The CNT refers to transform acquired based on a prediction signal generated using all previously reconstructed pixels. In addition, the transform process may be applied to square pixel blocks having the same size or may be applied to blocks having a variable size rather than square.

The quantizer 130 may quantize the transform coefficients and transmit them to the entropy encoder 190. The entropy encoder 190 may encode the quantized signal (information on the quantized transform coefficients) and output a bitstream. The information on the quantized transform coefficients may be referred to as residual information. The quantizer 130 may rearrange quantized transform coefficients in a block type into a one-dimensional vector form based on a coefficient scanning order and generate information on the quantized transform coefficients based on the quantized transform coefficients in the one-dimensional vector form.

The entropy encoder 190 may perform various encoding methods such as, for example, exponential Golomb, context-adaptive variable length coding (CAVLC), context-adaptive binary arithmetic coding (CABAC), and the like. The entropy encoder 190 may encode information necessary for video/image reconstruction other than quantized transform coefficients (e.g., values of syntax elements, etc.) together or separately. Encoded information (e.g., encoded video/image information) may be transmitted or stored in units of network abstraction layers (NALs) in the form of a bitstream. The video/image information may further include information on various parameter sets such as an adaptation parameter set (APS), a picture parameter set (PPS), a sequence parameter set (SPS), or a video parameter set (VPS). In addition, the video/image information may further include general constraint information. The signaled information, transmitted information and/or syntax elements described in the present disclosure may be encoded through the above-described encoding procedure and included in the bitstream.

The bitstream may be transmitted over a network or may be stored in a digital storage medium. The network may include a broadcasting network and/or a communication network, and the digital storage medium may include various storage media such as USB, SD, CD, DVD, Blu-ray, HDD, SSD, and the like. A transmitter (not shown) transmitting a signal output from the entropy encoder 190 and/or a storage unit (not shown) storing the signal may be included as internal/external element of the image encoding apparatus 100. Alternatively, the transmitter may be provided as the component of the entropy encoder 190.

The quantized transform coefficients output from the quantizer 130 may be used to generate a residual signal. For example, the residual signal (residual block or residual samples) may be reconstructed by applying dequantization and inverse transform to the quantized transform coefficients through the dequantizer 140 and the inverse transformer 150.

The adder 155 adds the reconstructed residual signal to the prediction signal output from the inter prediction unit 180 or the intra prediction unit 185 to generate a reconstructed signal (reconstructed picture, reconstructed block, reconstructed sample array). If there is no residual for the block to be processed, such as a case where the skip mode is applied, the predicted block may be used as the reconstructed block. The adder 155 may be called a reconstructor or a reconstructed block generator. The generated reconstructed signal may be used for intra prediction of a next block to be processed in the current picture and may be used for inter prediction of a next picture through filtering as described below.

Meanwhile, as described below, luma mapping with chroma scaling (LMCS) is applicable in a picture encoding process.

The filter 160 may improve subjective/objective image quality by applying filtering to the reconstructed signal. For example, the filter 160 may generate a modified reconstructed picture by applying various filtering methods to the reconstructed picture and store the modified reconstructed picture in the memory 170, specifically, a DPB of the memory 170. The various filtering methods may include, for example, deblocking filtering, a sample adaptive offset, an adaptive loop filter, a bilateral filter, and the like. The filter 160 may generate various information related to filtering and transmit the generated information to the entropy encoder 190 as described later in the description of each filtering method. The information related to filtering may be encoded by the entropy encoder 190 and output in the form of a bitstream.

The modified reconstructed picture transmitted to the memory 170 may be used as the reference picture in the inter prediction unit 180. When inter prediction is applied through the image encoding apparatus 100, prediction mismatch between the image encoding apparatus 100 and the image decoding apparatus may be avoided and encoding efficiency may be improved.

The DPB of the memory 170 may store the modified reconstructed picture for use as a reference picture in the inter prediction unit 180. The memory 170 may store the motion information of the block from which the motion information in the current picture is derived (or encoded) and/or the motion information of the blocks in the picture that have already been reconstructed. The stored motion information may be transmitted to the inter prediction unit 180 and used as the motion information of the spatial neighboring block or the motion information of the temporal neighboring block. The memory 170 may store reconstructed samples of reconstructed blocks in the current picture and may transfer the reconstructed samples to the intra prediction unit 185.

### Overview of image decoding apparatus

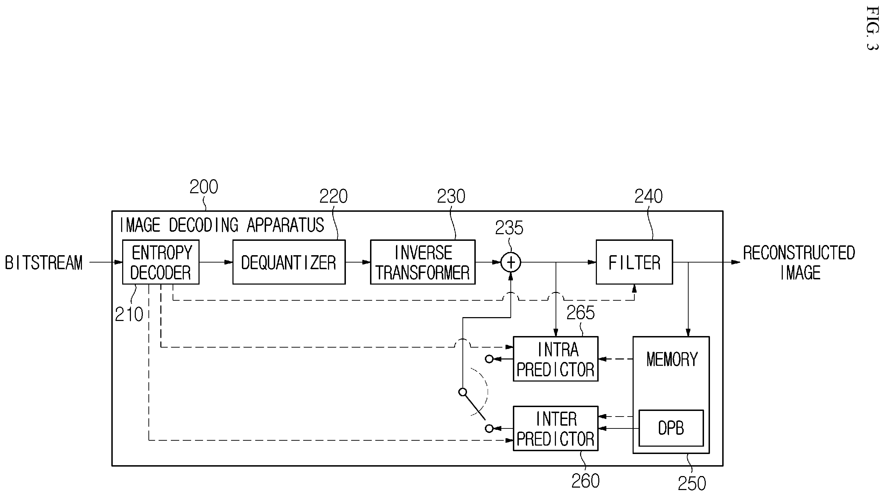

FIG. 3 is a view schematically showing an image decoding apparatus, to which an embodiment of the present disclosure is applicable.

As shown in FIG. 3, the image decoding apparatus 200 may include an entropy decoder 210, a dequantizer 220, an inverse transformer 230, an adder 235, a filter 240, a memory 250, an inter prediction unit 260 and an intra prediction unit 265. The inter prediction unit 260 and the intra prediction unit 265 may be collectively referred to as a "prediction unit". The dequantizer 220 and the inverse transformer 230 may be included in a residual processor.

All or at least some of a plurality of components configuring the image decoding apparatus 200 may be configured by a hardware component (e.g., an image decoding apparatus 200 or a processor) according to an embodiment. In addition, the memory 250 may include a decoded picture buffer (DPB) or may be configured by a digital storage medium.

The image decoding apparatus 200, which has received a bitstream including video/image information, may reconstruct an image by performing a process corresponding to a process performed by the image encoding apparatus 100 of FIG. 2. For example, the image decoding apparatus 200 may perform decoding using a processing unit applied in the image encoding apparatus 100. Thus, the processing unit of decoding may be a coding unit, for example. The coding unit may be acquired by partitioning a coding tree unit or a largest coding unit. The reconstructed image signal decoded and output through the image decoding apparatus 200 may be reproduced through a reproducing apparatus (not shown).

The image decoding apparatus 200 may receive a signal output from the image encoding apparatus 100 of FIG. 2 in the form of a bitstream. The received signal may be decoded through the entropy decoder 210. For example, the entropy decoder 210 may parse the bitstream to derive information (e.g., video/image information) necessary for image reconstruction (or picture reconstruction). The video/image information may further include information on various parameter sets such as an adaptation parameter set (APS), a picture parameter set (PPS), a sequence parameter set (SPS), or a video parameter set (VPS). In addition, the video/image information may further include general constraint information. The image decoding apparatus 200 may further decode picture based on the information on the parameter set and/or the general constraint information. Signaled/received information and/or syntax elements described in the present disclosure may be decoded through the decoding procedure and obtained from the bitstream. For example, the entropy decoder 210 decodes the information in the bitstream based on a coding method such as exponential Golomb coding, CAVLC, or CABAC, and output values of syntax elements required for image reconstruction and quantized values of transform coefficients for residual. More specifically, the CABAC entropy decoding method may receive a bin corresponding to each syntax element in the bitstream, determine a context model using a decoding target syntax element information, decoding information of a neighboring block and a decoding target block or information of a symbol/bin decoded in a previous stage, and perform arithmetic decoding on the bin by predicting a probability of occurrence of a bin according to the determined context model, and generate a symbol corresponding to the value of each syntax element. In this case, the CABAC entropy decoding method may update the context model by using the information of the decoded symbol/bin for a context model of a next symbol/bin after determining the context model. The information related to the prediction among the information decoded by the entropy decoder 210 may be provided to the prediction unit (the inter prediction unit 260 and the intra prediction unit 265), and the residual value on which the entropy decoding was performed in the entropy decoder 210, that is, the quantized transform coefficients and related parameter information, may be input to the dequantizer 220. In addition, information on filtering among information decoded by the entropy decoder 210 may be provided to the filter 240. Meanwhile, a receiver (not shown) for receiving a signal output from the image encoding apparatus 100 may be further configured as an internal/external element of the image decoding apparatus 200, or the receiver may be a component of the entropy decoder 210.

Meanwhile, the image decoding apparatus 200 according to the present disclosure may be referred to as a video/image/picture decoding apparatus. The image decoding apparatus 200 may be classified into an information decoder (video/image/picture information decoder) and a sample decoder (video/image/picture sample decoder). The information decoder may include the entropy decoder 210. The sample decoder may include at least one of the dequantizer 220, the inverse transformer 230, the adder 235, the filter 240, the memory 250, the inter prediction unit 160 or the intra prediction unit 265.

The dequantizer 220 may dequantize the quantized transform coefficients and output the transform coefficients. The dequantizer 220 may rearrange the quantized transform coefficients in the form of a two-dimensional block. In this case, the rearrangement may be performed based on the coefficient scanning order performed in the image encoding apparatus 100. The dequantizer 220 may perform dequantization on the quantized transform coefficients by using a quantization parameter (e.g., quantization step size information) and obtain transform coefficients.

The inverse transformer 230 may inversely transform the transform coefficients to obtain a residual signal (residual block, residual sample array).

The prediction unit may perform prediction on the current block and generate a predicted block including prediction samples for the current block. The prediction unit may determine whether intra prediction or inter prediction is applied to the current block based on the information on the prediction output from the entropy decoder 210 and may determine a specific intra/inter prediction mode (prediction technique).

It is the same as described in the prediction unit of the image encoding apparatus 100 that the prediction unit may generate the prediction signal based on various prediction methods (techniques) which will be described later.

The intra prediction unit 265 may predict the current block by referring to the samples in the current picture. The description of the intra prediction unit 185 is equally applied to the intra prediction unit 265.

The inter prediction unit 260 may derive a predicted block for the current block based on a reference block (reference sample array) specified by a motion vector on a reference picture. In this case, in order to reduce the amount of motion information transmitted in the inter prediction mode, motion information may be predicted in units of blocks, subblocks, or samples based on correlation of motion information between the neighboring block and the current block. The motion information may include a motion vector and a reference picture index. The motion information may further include inter prediction direction (L0 prediction, L1 prediction, Bi prediction, etc.) information. In the case of inter prediction, the neighboring block may include a spatial neighboring block present in the current picture and a temporal neighboring block present in the reference picture. For example, the inter prediction unit 260 may configure a motion information candidate list based on neighboring blocks and derive a motion vector of the current block and/or a reference picture index based on the received candidate selection information. Inter prediction may be performed based on various prediction modes, and the information on the prediction may include information indicating a mode of inter prediction for the current block.

The adder 235 may generate a reconstructed signal (reconstructed picture, reconstructed block, reconstructed sample array) by adding the obtained residual signal to the prediction signal (predicted block, predicted sample array) output from the prediction unit (including the inter prediction unit 260 and/or the intra prediction unit 265). If there is no residual for the block to be processed, such as when the skip mode is applied, the predicted block may be used as the reconstructed block. The description of the adder 155 is equally applicable to the adder 235. The adder 235 may be called a reconstructor or a reconstructed block generator. The generated reconstructed signal may be used for intra prediction of a next block to be processed in the current picture and may be used for inter prediction of a next picture through filtering as described below.

The filter 240 may improve subjective/objective image quality by applying filtering to the reconstructed signal. For example, the filter 240 may generate a modified reconstructed picture by applying various filtering methods to the reconstructed picture and store the modified reconstructed picture in the memory 250, specifically, a DPB of the memory 250. The various filtering methods may include, for example, deblocking filtering, a sample adaptive offset, an adaptive loop filter, a bilateral filter, and the like.

The (modified) reconstructed picture stored in the DPB of the memory 250 may be used as a reference picture in the inter prediction unit 260. The memory 250 may store the motion information of the block from which the motion information in the current picture is derived (or decoded) and/or the motion information of the blocks in the picture that have already been reconstructed. The stored motion information may be transmitted to the inter prediction unit 260 so as to be utilized as the motion information of the spatial neighboring block or the motion information of the temporal neighboring block. The memory 250 may store reconstructed samples of reconstructed blocks in the current picture and transfer the reconstructed samples to the intra prediction unit 265.

In the present disclosure, the embodiments described in the filter 160, the inter prediction unit 180, and the intra prediction unit 185 of the image encoding apparatus 100 may be equally or correspondingly applied to the filter 240, the inter prediction unit 260, and the intra prediction unit 265 of the image decoding apparatus 200.

## Overview of intra prediction

Hereinafter, intra prediction according to the present disclosure will be described.

Intra prediction may represent prediction for generating prediction samples for a current block based on reference samples in a picture to which a current block belongs (hereinafter referred to as a current picture). When intra prediction applies to a current block, neighboring reference samples to be used for intra prediction of the current block may be derived. The neighboring reference samples of the current block may include a total of 2xnh samples neighbor/adjacent to a left boundary of the current block having a size of nWxnH and samples adjacent to a bottom-left, a total of 2xnW samples adjacent to a top boundary of the current block and samples adjacent to a top-right, and one sample adjacent to a top-left of the current block. Alternatively, the neighboring reference samples of the current block may include a plurality of columns of top neighboring samples and a plurality of rows of left neighboring samples. In addition, the neighboring reference samples of the current block may include a total of nH samples adjacent to a right boundary of the current block having a size of nWxnH, a total of nW samples adjacent to a bottom boundary of the current block and one sample adjacent to a bottom-right of the current block.

However, some of the neighboring reference samples of the current block have not yet been decoded or may not be available. In this case, the image decoding apparatus 200 may construct neighboring reference samples to be used for prediction by substituting unavailable samples with available samples. Alternatively, neighboring reference samples to be used for prediction may be constructed through interpolation of available samples.

When the neighboring reference samples are derived, (i) a prediction sample may be derived based on an average or interpolation of neighboring reference samples of the current block, and (ii) the prediction sample may be derived based on a reference sample present in a specific (prediction) direction with respect to the prediction sample among the neighboring reference samples of the current block. The case of (i) may be called a non-directional mode or a non-angular mode, and the case of (ii) may be called a directional mode or an angular mode.

Also, the prediction sample may be generated through interpolation of the first neighboring sample positioned in the prediction direction of the intra prediction mode of the current block based on the prediction target sample of the current block among the neighboring reference samples and the second neighboring sample positioned in the opposite direction thereof. The above-described case may be referred to as linear interpolation intra prediction (LIP).

In addition, chroma prediction samples may be generated based on luma samples using a linear model. This case may be called an LM (linear model) mode.

In addition, a temporary prediction sample of the current block may be derived based on the filtered neighboring reference samples, and the prediction sample of the current block may be derived by a weighted sum of at least one reference sample derived according to the intra prediction mode among the existing neighboring reference samples, that is, unfiltered neighboring reference samples, and the temporary prediction sample. The above-described case may be referred to as position dependent intra prediction (PDPC).

In addition, a reference sample line with the highest prediction accuracy is selected from among multiple neighboring reference sample lines of the current block, to derive the prediction sample using the reference sample located in the prediction direction in the corresponding line, and, at this time, information on the used reference sample line (e.g., intra_luma_ref_idx) may be encoded in a bitstream and signaled. This case may be referred to as multi-reference line (MRL) intra prediction or MRL-based intra prediction. When MRL is not applied, reference samples may be derived from reference sample lines directly adjacent to the current block and in this case, information on the reference sample lines may not be signaled.

In addition, the current block may be partitioned into vertical or horizontal sub-partitions and intra prediction may be performed based on the same intra prediction mode for each subpartition. In this case, the neighboring reference samples of the intra prediction may be derived in units of sub-partitions. That is, the reconstructed sample of the previous sub-partition in the encoding/decoding order may be used as the neighboring reference sample of the current sub-partition. In this case, the intra prediction mode for the current block is equally applied to the sub-partitions, but the intra prediction performance may be improved in some cases by deriving and using neighboring reference samples in units of sub-partitions. This prediction method may be called intra sub-partitions (ISP) or ISP-based intra prediction.

These intra prediction techniques may be called an intra prediction type or additional intra prediction mode to be distinguished from a direction or non-directional intra prediction mode. The intra prediction technique (intra prediction type, additional intra prediction mode, etc.) may be referred to as various terms such as an intra prediction technique or an additional intra prediction mode. For example, the intra prediction type (or additional intra prediction mode, etc.) may include at least one of the aforementioned LIP, LM, PDPC, MRL or ISP. A general intra prediction method excluding a specific intra prediction type such as LIP, LM, PDPC, MRL, and ISP may be referred to as a normal intra prediction type. The normal intra prediction type may be generally applied when the above specific intra prediction type is not applied, and prediction may be performed based on the above-described intra prediction mode. Meanwhile, if necessary, post-processing filtering may be performed on the derived prediction sample.

Specifically, the intra prediction procedure may include an intra prediction mode/type determination step, a neighboring reference sample derivation step, and an intra prediction mode/type based prediction sample derivation step. In addition, if necessary, a post-filtering step may be performed on the derived prediction sample.

Meanwhile, in addition to the above-described intra prediction types, affine linear weighted intra prediction (ALWIP) may be used. The ALWIP may be referred to as linear weighted intra prediction (LWIP) or matrix weighted intra prediction or matrix based intra prediction (MIP). If the MIP is applied to the current block, i) neighboring reference samples on which an averaging procedure has been performed is used, ii) matrix-vector-multiplication procedure is performed, and iii) a horizontal/vertical interpolation procedure is further performed to derive prediction samples for the current block as necessary. The intra prediction modes used for the MIP may be configured to be different from the intra prediction modes used in the LIP, PDPC, MRL, ISP intra prediction or normal intra prediction. The intra prediction mode for the MIP may be called a MIP intra prediction mode, a MIP prediction mode, or a MIP mode. For example, a matrix and offset used in the matrix vector multiplication may be set differently according to the intra prediction mode for the MIP. Here, the matrix may be called a (MIP) weighting matrix, and the offset may be called a (MIP) offset vector or a (MIP) bias vector. A specific MIP method will be described later.

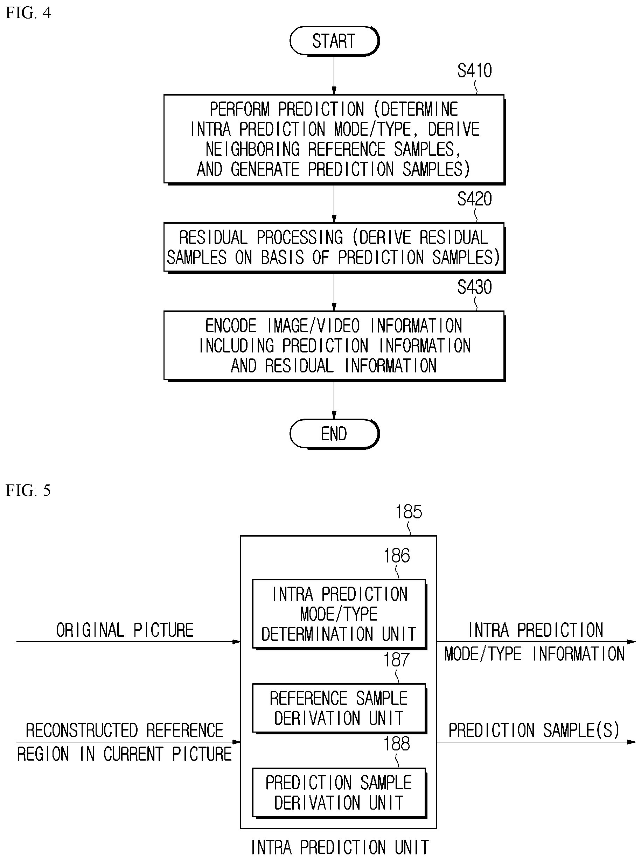

The block reconstruction procedure based on intra prediction and the intra prediction unit in the encoding apparatus will be described later with reference to FIGS. 4 and 5.

FIG. 4 is a flowchart illustrating an intra prediction based video/image encoding method.

The encoding method of FIG. 4 may be performed by the image encoding apparatus 100 of FIG. 2. Specifically, step S410 may be performed by the intra prediction unit 185 and step S420 may be performed by the residual processor. Specifically, step S420 may be performed by the subtractor 115. Step S430 may be performed by the entropy encoder 190. The prediction information of step S430 may be derived by the intra prediction unit 185, and the residual information of step S430 may be derived by the residual processor. The residual information is information on residual samples. The residual information may include information on quantized transform coefficients for the residual samples. As described above, the residual samples may be derived as transform coefficients through the transformer 120 of the image encoding apparatus 100, and the transform coefficients may be derived as quantized transform coefficients through the quantizer 130.

Information on the quantized transform coefficients may be encoded by the entropy encoder 190 through a residual coding procedure.

The image encoding apparatus 100 may perform intra prediction with respect to the current block (S410). The image encoding apparatus 100 may derive an intra prediction mode/type for the current block, derive neighboring reference samples of the current block, and generate prediction samples in the current block based on the intra prediction mode/type and the neighboring reference samples. Here, a procedure for determining an intra prediction mode/type, a procedure for deriving neighboring reference samples and a procedure for generating prediction samples may be simultaneously performed, or any one procedure may be performed before another procedure.

FIG. 5 is a view illustrating a configuration of the intra prediction unit 185 according to the present disclosure.

As shown in FIG. 5, the intra prediction unit 185 of the image encoding apparatus 100 may include an intra prediction mode/type determination unit 186, a reference sample derivation unit 187, a prediction sample derivation unit 188. The intra prediction mode/type determination unit 186 may determine the intra prediction mode/type for the current block, the reference sample derivation unit 187 may derive neighboring reference samples of the current block, and the prediction sample derivation unit 188 may derive the prediction samples of the current block. Meanwhile, although not shown, when the below-described prediction sample filtering procedure is performed, the intra prediction unit 185 may further include a prediction sample filter (not shown).

The image encoding apparatus 100 may determine a mode/type applied to the current block from among a plurality of intra prediction modes/types. The encoding apparatus 100 may compare RD costs of the intra prediction modes/types and determine an optimal intra prediction mode/type for the current block.

Meanwhile, the image encoding apparatus 100 may perform a prediction sample filtering procedure. Predictive sample filtering may be referred to as post filtering. Some or all of the prediction samples may be filtered by the prediction sample filtering procedure. In some cases, the prediction sample filtering procedure may be omitted.

Referring to FIG. 4 again, the image encoding apparatus 100 may generate residual samples for the current block based on prediction samples or filtered prediction samples (S420). The image encoding apparatus 100 may derive the residual samples by subtracting the prediction samples from the original samples of the current block. That is, the image encoding apparatus 100 may derive the residual sample value by subtracting the prediction sample value from the original sample value.

The image encoding apparatus 100 may encode image information including information on intra prediction (prediction information) and residual information of the residual samples (S430). The prediction information may include the intra prediction mode information and the intra prediction type information. The image encoding apparatus 100 may output encoded image information in the form of a bitstream. The output bitstream may be transmitted to the image decoding apparatus 200 through a storage medium or a network.

The residual information may include a residual coding syntax described below. The image encoding apparatus 100 may transform/quantize the residual samples to derive quantized transform coefficients. The residual information may include information on the quantized transform coefficients.

Meanwhile, as described above, the image encoding apparatus 100 may generate a reconstructed picture (including reconstructed samples and a reconstructed block). To this end, the image encoding apparatus 100 may perform dequantization/inverse transform with respect to the quantized transform coefficients again to derive (modified) residual samples. The residual samples are transformed/quantized and then dequantized/inversely transformed, in order to derive the same residual samples as the residual samples derived in the image decoding apparatus 200 as described above. The image encoding apparatus 100 may generate a reconstructed block including the reconstructed samples for the current block based on the prediction samples and the (modified) residual samples. A reconstructed picture for the current picture may be generated based on the reconstructed block. As described above, an in-loop filtering procedure is further applicable to the reconstructed picture.

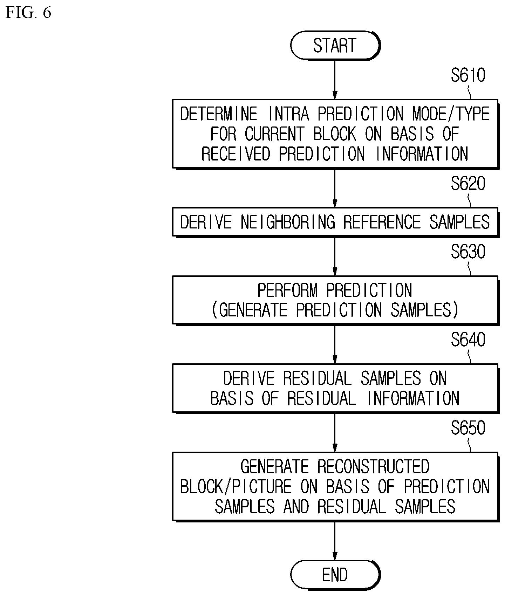

FIG. 6 is a flowchart illustrating an intra prediction based video/image decoding method.

The image decoding apparatus 200 may perform operation corresponding to operation performed by the image encoding apparatus 100.

The decoding method of FIG. 6 may be performed by the image decoding apparatus 200 of FIG. 3. S610 to S630 may be performed by the intra prediction unit 265 of the decoding apparatus, and the prediction information of S610 and the residual information of S640 may be obtained from the bitstream by the entropy decoder 210. The residual processor of the image decoding apparatus 200 may derive the residual samples for the current block based on the residual information (S640). Specifically, the dequantizer 220 of the residual processor may perform dequantization based on quantized transform coefficients derived based on the residual information to derive transform coefficients, and the dequantizer 230 of the residual processor may perform inverse transform with respect to the transform coefficients to derive the residual samples for the current block. Step S650 may be performed by the adder 235 or the reconstructor of the decoding apparatus.

Specifically, the image decoding apparatus 200 may derive a intra prediction mode/type for the current block based on the received prediction information (intra prediction mode/type information) (S610). The image decoding apparatus 200 may derive neighboring reference samples of the current block (S620). The image decoding apparatus 200 may generate prediction samples in the current blocks based on the intra prediction mode/type and the neighboring reference samples (S630). In this case, the image decoding apparatus 200 may perform a prediction sample filtering procedure. Predictive sample filtering may be referred to as post filtering. Some or all of the prediction samples may be filtered by the prediction sample filtering procedure. In some cases, the prediction sample filtering procedure may be omitted.

The image decoding apparatus 200 generates residual samples for the current block based on the received residual information (S640). The image decoding apparatus 200 may generate reconstructed samples for the current block based on the prediction samples and the residual samples, and derive a reconstructed block including the reconstructed samples (S650). A reconstructed picture for the current picture may be generated based on the reconstructed block. As described above, the in-loop filtering procedure is further applicable to the reconstructed picture.

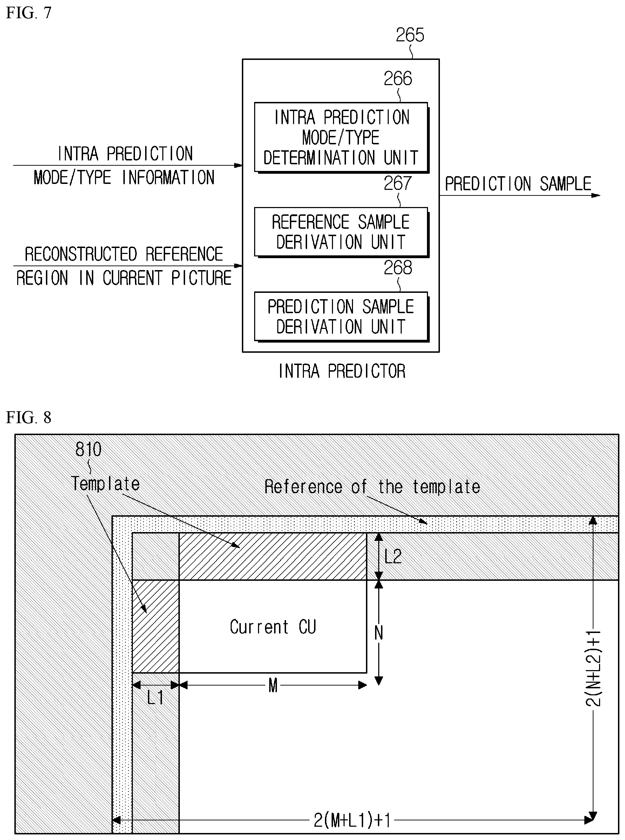

FIG. 7 is a view illustrating a configuration of the intra prediction unit 265 according to the present disclosure.

As shown in FIG. 7, the intra prediction unit 265 of the image decoding apparatus 200 may include an intra prediction mode/type determination unit 266, a reference sample derivation unit 267 and a prediction sample derivation unit 268, the intra prediction mode/type determination unit 266 may determine the intra prediction mode/type for the current block based on the intra prediction mode/type information obtained by the intra prediction mode/type determination unit 186 of the image encoding apparatus 100, the reference sample derivation unit 266 may derive the neighboring reference samples of the current block, and the prediction sample derivation unit 268 may derive the prediction samples of the current block. Meanwhile, although not shown, when the above-described prediction sample filtering procedure is performed, the intra prediction unit 265 may further include a prediction sample filter (not shown).

The intra prediction mode information may include flag information (e.g., intra_luma_mpm_flag) specifying whether a most probable mode (MPM) or a remaining mode applies to the current block, and, when the MPM applies to the current block, the intra prediction mode information may further include index information (e.g., intra_luma_mpm_idx) specifying one of intra prediction mode candidates (MPM candidates). The intra prediction mode candidates (MPM candidates) may be configured as an MPM candidate list or an MPM list. In addition, when the MPM does not apply to the current block, the intra prediction mode information may further include remaining mode information (e.g., intra_luma_mpm_remainder) specifying one of the remaining intra prediction modes excluding the intra prediction mode candidates (MPM candidates). The image decoding apparatus 200 may determine the intra prediction mode of the current block based on the intra prediction mode information.

In addition, the intra prediction technique information may be implemented in various forms. For example, the intra prediction technique information may include intra prediction technique index information specifying one of the intra prediction techniques. As another example, the intra prediction technique information may include at least one of reference sample line information (e.g., intra_luma_ref_idx)) specifying whether the MRL applies to the current block and which reference sample line is used if applied, ISP flag information (e.g., intra_subpartitions_mode_flag) specifying whether the ISP applies to the current block, ISP type information (e.g., intra_subpartitions_split_flag) specifying the split type of subpartitions when the ISP applies, flag information specifying whether PDPC applies or flag information specifying whether LIP applies. In addition, the intra prediction type information may include an MIP flag specifying whether MIP is applied to the current block. In the present disclosure, the ISP flag information may be referred to as an ISP application indicator.

The intra prediction mode information and/or the intra prediction type information may be encoded/decoded through the coding method described in the present disclosure. For example, the intra prediction mode information and/or the intra prediction type information may be encoded/decoded through entropy coding (e.g., CABAC or CAVLC) based on truncated (rice) binary code.

Meanwhile, the intra prediction mode may further include a cross-component linear model (CCLM) mode for chroma samples in addition to the PLANAR mode, DC mode and directional intra prediction modes. The CCLM mode may be split into L_CCLM, T_CCLM, LT_CCLM according to whether left samples, top samples or both thereof is considered for CCLM parameter derivation and may apply only to a chroma component.

The intra prediction mode may be indexed, for example, as shown in Table 1 below.

[Table 1]

| Intra prediction mode | Associated name |
| --- | --- |
| 0 | INTRA_PLANAR |
| 1 | INTRA_DC |
| 2..66 | INTRA_ANGULAR2..INTRA_ANGULAR66 |
| 81..83 | INTRA_LT_CCLM, INTRA_L_CCLM, INTRA_T_CCLM |

Meanwhile, the intra prediction type (or additional intra prediction mode) may include at least one of the LIP, PDPC, MRL, ISP or MIP. The intra prediction type may be indicated based on intra prediction type information, and the intra prediction type information may be implemented in various forms. For example, the intra prediction type information may include intra prediction type index information indicating one of the intra prediction types. As another example, the intra prediction type information may include at least one of reference sample line information (e.g., intra_luma_ref_idx) indicating whether the MRL is applied to the current block and, if applicable, which reference sample line is used, ISP flag information (e.g., Intra_subpartitions_mode_flag) indicating whether the ISP is applied to the current block, ISP type information (e.g., Intra_subpartitions_split_flag) indicating the split type of subpartitions when the ISP is applied, flag information indicating whether PDCP is applied, or flag information whether LIP is applied. In addition, the intra prediction type information may include a MIP flag (or referred to as intra_mip_flag) indicating whether MIP is applied to the current block.

### Overview of template based intra mode derivation (TIMD)

FIG. 8 is a diagram illustrating a template area and a reference sample used in TIMD according to the present disclosure. TIMD may be a mode in which, for an intra prediction mode (IPM) of adjacent intra blocks and inter blocks, a SATD (Sum of absolute transformed difference) between a prediction block predicted from a template area 810 and an actual reconstructed sample is calculated, and then the mode with the smallest SATD is selected as the intra mode of a current block.

According to another embodiment of the present disclosure, the present disclosure may select two modes having the smallest SATD, and then generate prediction blocks for the two selected prediction modes, respectively. The prediction block of the current block may be generated by blending the two generated prediction blocks using a weighted sum method. Here, the method of blending the two modes may be performed when the condition of Equation 1 below is satisfied.

$$[Equation\ 1]$$

$$costMode2 < 2*costMode1$$

where, costMode1 may mean the mode with the smallest SATD. Also, costMode2 may mean the mode with the second smallest SATD.

If the condition of mathematical expression 1 is satisfied, the final prediction block may be generated by blending prediction blocks generated using two modes. Otherwise, the final prediction block may be generated using only one mode with the smallest SATD value.

When blending the prediction blocks generated using two prediction modes with the smallest SATD, the weight ratio applied may be as shown in Equation 2 below.

$$[Equation\ 2]$$

$$weight1 = costMode2/(costMode1 + costMode2)$$

$$weight2 = 1 - weight1$$

where, weight1 may mean a weight applied to the prediction block generated based on a mode with the smallest SATD. Additionally, weight2 may mean a weight applied to the prediction block generated based on the mode having the second smallest SATD.

### Overview of decoder-side intra mode derivation (DIMD)

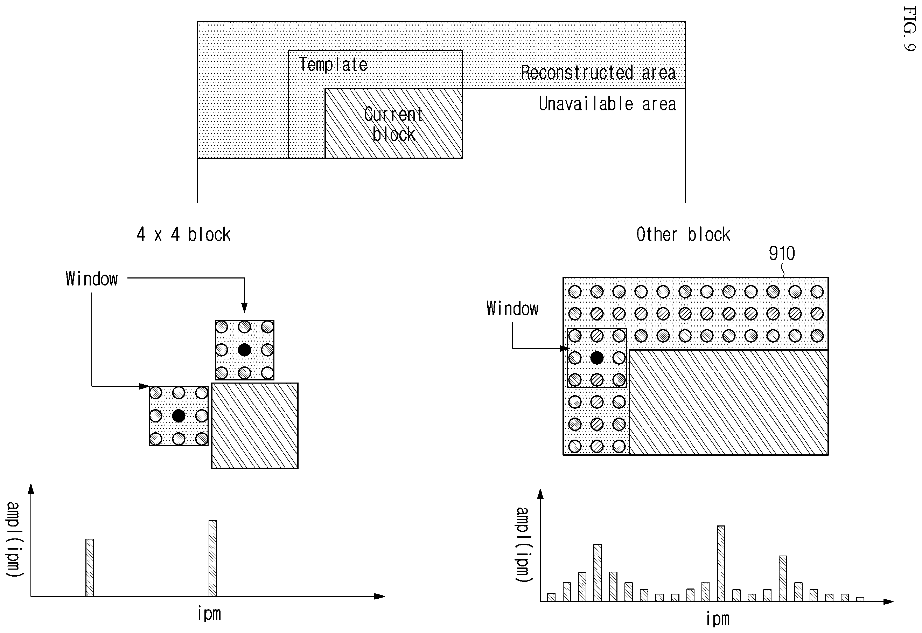

FIG. 9 is a diagram illustrating a method of constructing a Histogram of Gradient (HoG) in a DIMD mode according to the present disclosure. The DIMD mode according to the present disclosure may be derived and used in the image encoding apparatus 100 and the image decoding apparatus 200 without directly transmitting intra prediction mode information. The DIMD mode may be performed by obtaining a horizontal gradient and a vertical gradient from a second neighboring reference row and column adjacent to a current block and constructing a HoG therefrom.

Referring to FIG. 9, HoG may be obtained by applying a Sobel filter using 3-pixel L-shaped columns and rows 910 around the current block. At this time, if the boundaries of the blocks exist in different CTUs, the neighboring pixels of the current block may not be used for texture analysis.

Meanwhile, the Sobel filter may also be called a Sobel operator and may be an efficient filter for detecting edges. When using the Sobel filter, two types of Sobel filters may be used: a Sobel filter for the vertical direction and a Sobel filter for the horizontal direction.

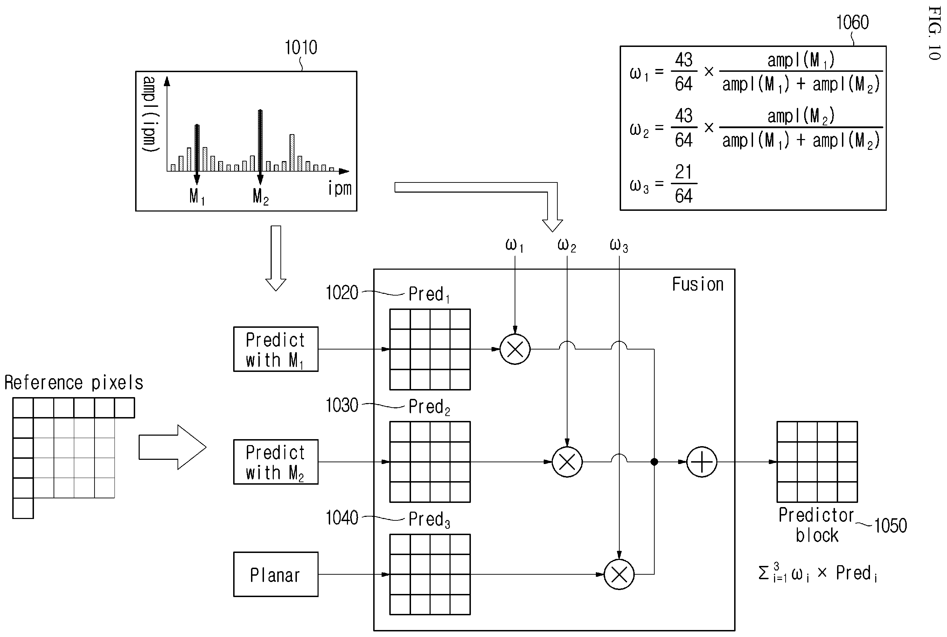

FIG. 10 is a diagram illustrating a method of constructing a prediction block when applying a DIMD mode according to the present disclosure. According to FIG. 10, the DIMD mode may be performed by selecting two intra modes 1010 having the largest histogram amplitude, blending prediction blocks 1020 and 1030 predicted using the two selected intra modes and a prediction block 1040 predicted in the planar mode to construct a final prediction block 1050. At this time, a weight applied when blending the prediction blocks may be derived from the histogram amplitude 1060. In addition, a DIMD flag may be transmitted in units of blocks to check whether DIMD is used.

Hereinafter, image encoding/decoding methods according to various embodiments of the present disclosure will be described in detail.

### Embodiment 1

An embodiment according to the present disclosure may be a method of fusing a plurality of prediction blocks predicted using an intra prediction mode and a reference sample line.

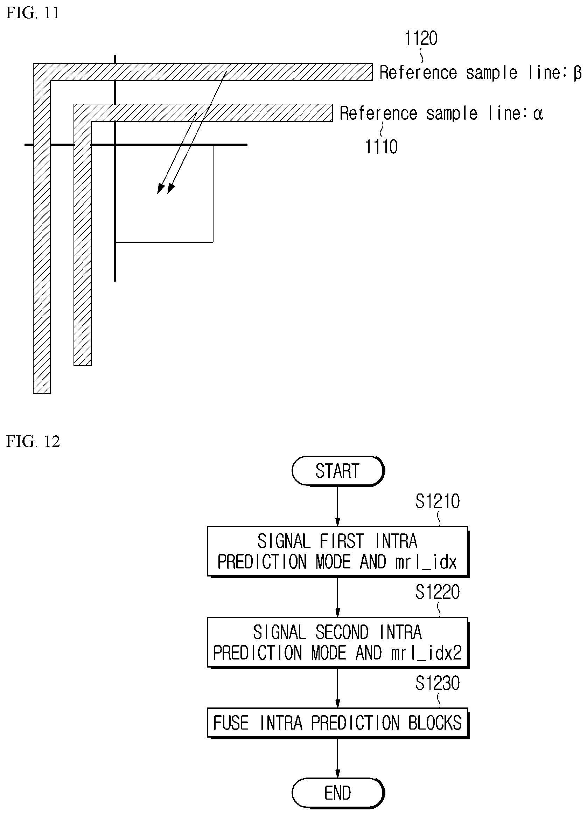

FIG. 11 is a diagram illustrating a plurality of reference sample lines for fusing prediction blocks according to the present disclosure. According to FIG. 11, the present disclosure may generate a prediction block using a reference sample line $\alpha$ 1110. In addition, the present disclosure may generate a prediction block using a reference sample line $\beta$ 1120. A new prediction block (final prediction block) may be generated by fusing the prediction block generated using the reference sample line $\alpha$ 1110 and the prediction blocks generated using the reference sample line $\beta$ 1120. Here, $\alpha$ and $\beta$ may be integers greater than or equal to 0.

According to another embodiment of the present disclosure, when fusion is applied to k prediction blocks, the final prediction block $Pred_{Final}$ may be derived as in Equation 3 below.

[Equation 3]

$$Pred_{Final} = \sum_{i=1}^{k} w_i \times Pred_i, \qquad \left(\sum_{i=1}^{k} w_i = 1\right)$$

where, $Pred_i$ may be the k-th prediction block predicted using the intra prediction mode and the reference sample line. In addition, $w_i$ may denote a weight for fusion of the prediction blocks. The intra prediction mode used in the present disclosure may include Planar, DC, and directional modes, and 0 or more reference sample lines may be used. Here, the 0-th reference sample line may mean a reference sample line with an index of 0. That is, the 0-th reference sample line may mean a first reference sample line closest to a current block. In addition, each prediction block $Pred_i$ to which fusion is applied may be predicted using different intra prediction modes and different reference sample lines.

According to another embodiment of the present disclosure, when fusion is applied to two prediction blocks, the final prediction block $Pred_{Final}$ may be derived as shown in Equation 4 below.

[Equation 4]

$$Pred_{Final} = w \times Pred_{m,\alpha} + (1 - w) \times Pred_{n,\beta}$$

where, $Pred_{m,\alpha}$ may denote a prediction block predicted using the intra prediction mode m and the reference sample line $\alpha$. In addition, $Pred_{n,\beta}$ may denote a prediction block predicted using the intra prediction mode n and the reference sample line $\beta$. In addition, w may denote a weight for fusion. In this case, m and n may be the same or different, and $\alpha$ and $\beta$ may also be the same or different.

For example, when fusion is applied to a prediction block $Pred_{m,\alpha}$ predicted using the reference sample line $\alpha$ greater than 0 and the directional mode m, and a prediction block $Pred_{planar,0}$ predicted using reference sample line 0 and the planar mode (or DC mode), the final prediction block may be derived as shown in Equation 5 below.

[Equation 5]

$$Pred_{Final} = w \times Pred_{m,\alpha} + (1 - w) \times Pred_{Planar,0}$$

According to another embodiment of the present disclosure, when fusion is applied to three prediction blocks, the final prediction block PredFinal may be derived as shown in Equation 6 below.

[Equation 6]

$$\mathbf{Pred_{Final} = w \times Pred_{m,\alpha} + (1-w) \times Pred_{Planar,0}}$$

where, $Pred_{m,\alpha}$ may denote a prediction block predicted using the intra prediction mode m and the reference sample line $\alpha$. $Pred_{n,\beta}$ may denote a prediction block predicted using the intra prediction mode n and the reference sample line $\beta$. $Pred_{l,\gamma}$ may denote a prediction block predicted by the intra prediction mode 1 and the reference sample line $\gamma$. In addition, w1, w2, w3 may be weights for fusion of prediction blocks. In this case, w1+w2+w3 may be 1. In addition, m, n, l may be the same or different, and $\alpha$, $\beta$, $\gamma$ may also be the same or different.

According to one embodiment of the present disclosure, when intra prediction modes used to predict each prediction block are different from each other, one intra prediction mode may be signaled and the remaining intra prediction modes may be derived by the image decoding apparatus 200 without signaling. For example, DIMD or TIMD may be used to derive the intra mode. In addition, the remaining intra prediction modes may be determined by an agreement between the image encoding apparatus 100 and the image decoding apparatus 200.

As another example, one intra prediction mode may be signaled to predict each prediction block, and the remaining intra prediction modes may be fixedly used as the planar mode or the DC mode. Alternatively, one intra prediction mode may be signaled to predict each prediction block, and the remaining intra prediction modes may be signaled as one of the Most Probable Mode (MPM) candidate lists. That is, the remaining intra prediction modes may be determined from among the MPM candidates in the MPM candidate list. In this case, the MPM candidate list may be composed of intra modes of neighboring blocks of the prediction block. That is, the MPM candidate list may be composed of intra prediction modes of neighboring blocks of the current block to be predicted.

Alternatively, one intra prediction mode may be signaled to predict each prediction block, and the remaining intra prediction modes may be transmitted as one mode from a list of specific modes. For example, the list of specific modes may be composed of modes 0, 1, 18, 50, 34, and 66 regardless of the neighboring modes, and the image encoding apparatus 100 and the image decoding apparatus 200 may signal and obtain one of them.

FIG. 12 is a flowchart illustrating a method of signaling and obtaining an intra prediction mode and a reference sample line index according to the present disclosure. The subject of FIG. 12 may be the image encoding apparatus 100 or the image decoding apparatus 200.

According to FIG. 12, the image encoding apparatus 100 and the image decoding apparatus 200 may signal and obtain a first intra prediction mode and mrl_idx (S1210). Here, mrl_idx may be an index indicating a first reference sample line. That is, the image encoding apparatus 100 and the image decoding apparatus 200 may signal and obtain the intra prediction mode and the reference sample line index for generating a first prediction block.

The image encoding apparatus 100 and the image decoding apparatus 200 may signal and obtain a second intra prediction mode and mrl_idx2 (S1220). Here, mrl_idx2 may be an index indicating a second reference sample line. That is, the image encoding apparatus 100 and the image decoding apparatus 200 may signal and obtain an intra prediction mode and a reference sample line index mrl_idx2 for generating the second prediction block.

The image encoding apparatus 100 and the image decoding apparatus 200 may fuse intra prediction blocks (S1230). That is, the first prediction block generated using the first intra prediction mode and mrl_idx and the second prediction block generated using the second intra prediction mode and mrl_idx2 may be fused. At this time, the image encoding apparatus 100 and the image decoding apparatus 200 may use weights.

The order of signaling and obtaining n intra prediction modes may be determined by an agreement between the image encoding apparatus 100 and the image decoding apparatus 200. At this time, n may be a natural number. Various prediction blocks may be generated using p intra prediction modes and q reference sample lines, and the method of generating and fusing the prediction blocks may be determined by an agreement between the image encoding apparatus 100 and the image decoding apparatus 200. At this time, p and q may be natural numbers.

According to another embodiment of the present disclosure, mrl_idx2 may not be signaled and obtained. In this case, the reference sample line may be derived in the image decoding apparatus 200, and each prediction block may be generated using a different reference sample line.

As another example, the signaling step (S1220) of the second intra prediction mode and mrl_idx2 of FIG. 12 may be omitted. Accordingly, the obtaining of the second intra prediction mode and mrl_idx2 may also be omitted. In this case, the image encoding apparatus 100 and the image decoding apparatus 200 may generate a prediction block using an intra prediction mode such as the first intra prediction mode and a reference sample line different from the reference sample line indicated by mrl_idx. That is, mrl_idx may be signaled and obtained, and mrl_idx2 may be derived in the image encoding apparatus 100 and the image decoding apparatus 200. Alternatively, the image encoding apparatus 100 and the image decoding apparatus 200 may derive an intra prediction mode so that a prediction block may be generated using an intra prediction mode different from the first intra prediction mode.

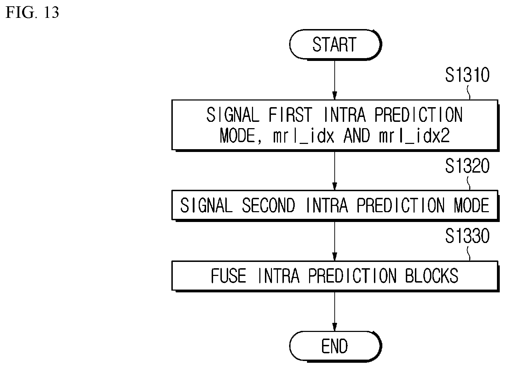

FIG. 13 is a flowchart illustrating a method of signaling and obtaining an intra prediction mode and a reference sample line index according to the present disclosure. The subject of FIG. 13 may be the image encoding apparatus 100 or the image decoding apparatus 200.

According to FIG. 13, the image encoding apparatus 100 and the image decoding apparatus 200 may signal and obtain a first intra prediction mode, mrl_idx, and mrl_idx2 (S1310). That is, the image encoding apparatus 100 and the image decoding apparatus 200 may signal and obtain the intra prediction mode and reference sample line index mrl_idx for generating a first prediction block, and the reference sample index mrl_idx2 for generating a second prediction block.

The image encoding apparatus 100 and the image decoding apparatus 200 may signal and obtain a second intra prediction mode (S1320). That is, the image encoding apparatus 100 and the image decoding apparatus 200 may signal and obtain the intra prediction mode for generating the second prediction block.

The image encoding apparatus 100 and the image decoding apparatus 200 may fuse intra prediction blocks (S1330). That is, the image encoding apparatus 100 and the image decoding apparatus 200 may fuse the prediction block generated using the first intra prediction mode and mrl_idx and the prediction block generated using the second intra prediction mode and mrl_idx2. At this time, fusion of the generated multiple prediction blocks may be performed using weights. A final prediction block can be generated by fusion of the prediction blocks using weights.

According to another embodiment of the present disclosure, the signaling step (S1320) of the second intra prediction mode may be omitted. Accordingly, the obtaining of the second intra prediction mode may also be omitted. In this case, the second intra prediction mode may be derived in the image encoding apparatus 100 and the image decoding apparatus 200. In addition, the signaling and obtaining of mrl_idx2 may be omitted. In this case, the reference sample line for generating the second prediction block may be derived in the image encoding apparatus 100 and the image decoding apparatus 200.

The order of signaling and obtaining n intra prediction modes may be determined by an agreement between the image encoding apparatus 100 and the image decoding apparatus 200. At this time, n may be a natural number. Various prediction blocks may be generated using p intra prediction modes and q reference sample lines, and the method of generating and fusing the prediction blocks may be determined by an agreement between the image encoding apparatus 100 and the image decoding apparatus 200. At this time, p and q may be natural numbers.

## Embodiment 2

According to the present disclosure, a reference sample line for generating each prediction block used for fusion may be signaled and obtained or derived in the image encoding apparatus 100 or the image decoding apparatus 200.

According to one embodiment of the present disclosure, when generating a final prediction block using two prediction blocks, information indicating one reference sample line may be signaled and acquired, and information indicating the remaining reference sample lines may not be signaled and obtained. When the information indicating the remaining reference sample lines is not obtained, the information indicating the remaining reference sample lines may be derived in the image encoding apparatus 100 or the image decoding apparatus 200. At this time, the remaining reference sample lines may use reference sample line 0 adjacent to the current prediction block. That is, the remaining reference sample lines may be reference sample lines that are closest to the current block to be predicted.

According to another embodiment of the present disclosure, when generating a final prediction block using two prediction blocks, information indicating one reference sample line may be signaled and obtained, and the remaining reference sample lines may be reference sample lines corresponding to +t or -t of the signaled and obtained reference sample line. Here, t may be a natural number. For example, when an index indicating reference sample line 2 is signaled and obtained and t is 1, the remaining reference sample line may be reference sample line 3 or reference sample line 1. That is, the remaining reference sample line may be one of the two reference sample lines that are closest to reference sample line 2.

According to another embodiment of the present disclosure, when generating a final prediction block using two prediction blocks, both information indicating two reference sample lines may be signaled and obtained as shown in Table 2 below.

[Table 2]

| ... |
| --- |
| if(sps_mrl_enabled_flag && (( y0 % CtbSizeY ) > 0 )) { |
| intra_luma_ref_idx |
| intra_luma_ref_idx2 |
| } |
| ... |
| if (intra_luma_ref_idx==0) |

(continued)

| intra_luma_not_planar_flag[ x0 ][ y0 ] |
| if( intra_luma_not_planar_flag[ x0 ][ y0 ] ) |
| intra_luma_mpm_idx[ x0 ][ y0 ] |
| ... |

In Table 2, intra_luma_ref_idx may denote a reference sample line index used to generate the first prediction block. Additionally, intra_luma_ref_idx2 may denote a reference sample line index used to generate the second prediction block.

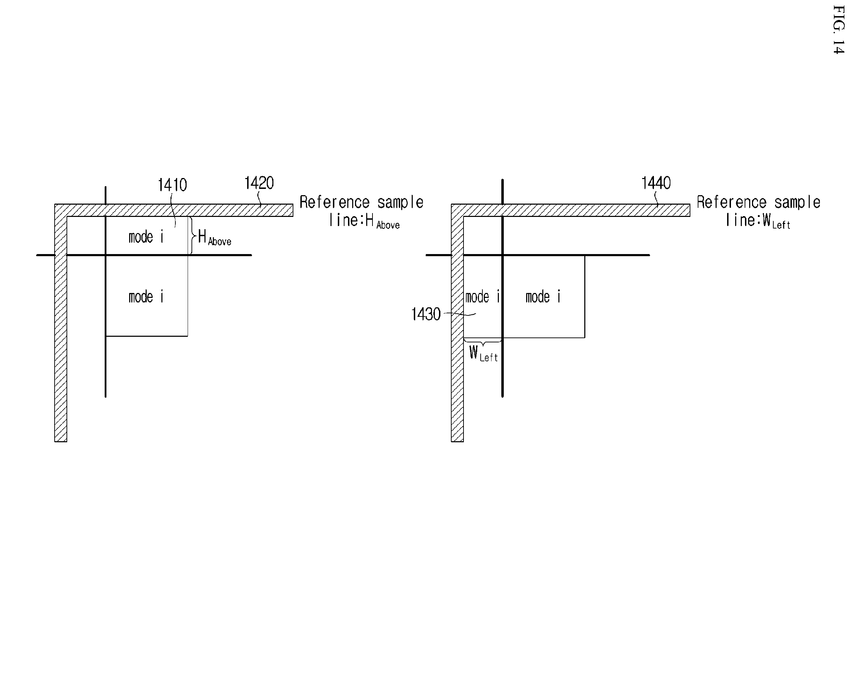

FIG. 14 is a diagram illustrating an example of a method of deriving a reference sample line according to the present disclosure. According to one embodiment of the present disclosure, a reference sample line required for generating a prediction block may be derived by utilizing information of previously reconstructed blocks close to a current block. For example, when the intra prediction modes of a current block and a neighboring block are the same, a reference sample line that is separated from the current block by the width or height of the neighboring block may be used to generate a prediction block.

Specifically, when the intra prediction mode of the current block and the intra prediction mode of the above-side previously reconstructed block 1410 are the same, a reference sample line 1420 that is separated from the current block by the height HAbove of the above-side previously reconstructed block 1410 may be used to generate a prediction block. In addition, when the intra prediction mode of the current block and the intra prediction mode of the left-side previously reconstructed block 1430 are the same, a reference sample line 1440 that is separated from the current block by the width $W_{Left}$ of the left-side reconstruction block 1430 may be used to generate a prediction block.

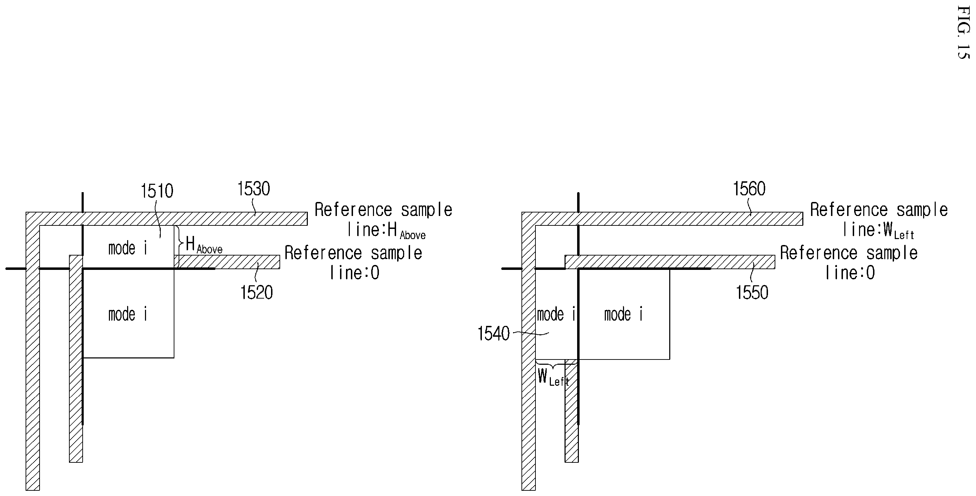

FIG. 15 is a diagram illustrating an example of a method for deriving a reference sample line according to the present disclosure. According to one embodiment of the present disclosure, when the intra prediction mode of a current block and the intra prediction mode of a neighboring block are the same, one reference sample line may be reference sample line 0, and the remaining reference sample lines may be reference sample lines that are separated from the current block by the width or height of the neighboring block. The image encoding apparatus 100 and the image decoding apparatus 200 may generate prediction blocks using the reference sample line 0 and the reference sample lines that are separated from the current block by the width or height of the neighboring block.

Specifically, when the intra prediction mode of the current block and the intra prediction mode of the above-side previously reconstructed block 1510 are the same, the reference sample line 0 1520 and the reference sample line 1530 separated from the current block by the height $H_{Above}$ of the above-side previously reconstructed block 1510 may be used to generate a prediction block. Thereafter, the image encoding apparatus 100 and the image decoding apparatus 200 may fuse the prediction blocks generated using the reference sample line 0 1520 and the reference sample line 1530 separated from the current block by the height $H_{Above}$ of the above-side previously reconstructed block 1510.

In addition, when the intra prediction mode of the current block and the intra prediction mode of the left-side reconstruction block 1540 are the same, the reference sample line 0 1550 and the reference sample line 1560 separated from the current block by the width $W_{Left}$ of the left-side previously reconstructed block 1540 may be used to generate a prediction block. Thereafter, the image encoding apparatus 100 and the image decoding apparatus 200 may fuse the prediction blocks generated using the reference sample line 0 1550 and the reference sample line 1560 separated from the current block by the width $W_{Left}$ of the above-side previously reconstructed block 1540. At this time, Equation 4 may be used to fuse the prediction blocks.

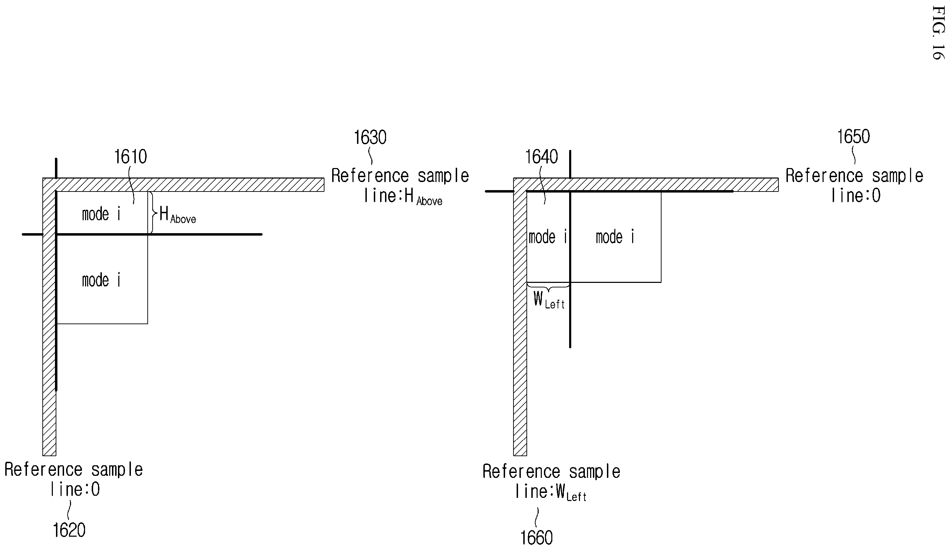

FIG. 16 is a diagram illustrating an example of a method of deriving a reference sample line according to the present disclosure. According to FIG. 16, when the intra prediction mode of the current block and the above-side previously reconstructed block 1610 are the same, the image encoding apparatus 100 and the image decoding apparatus 200 may generate prediction blocks using the reference sample line 1630 that is HAbove away from the current block to the above side and the reference sample line 1620 that is 0 away from the current block to the left side.

Alternatively, if the intra prediction modes of the current block and the left-side previously reconstructed block 1640 are the same, the image encoding apparatus 100 and the image decoding apparatus 200 may generate prediction blocks using a reference sample line 1650 that is 0 away from the current block to the above side and a reference sample line 1660 that is $W_{Left}$ away from the current block to the left side.

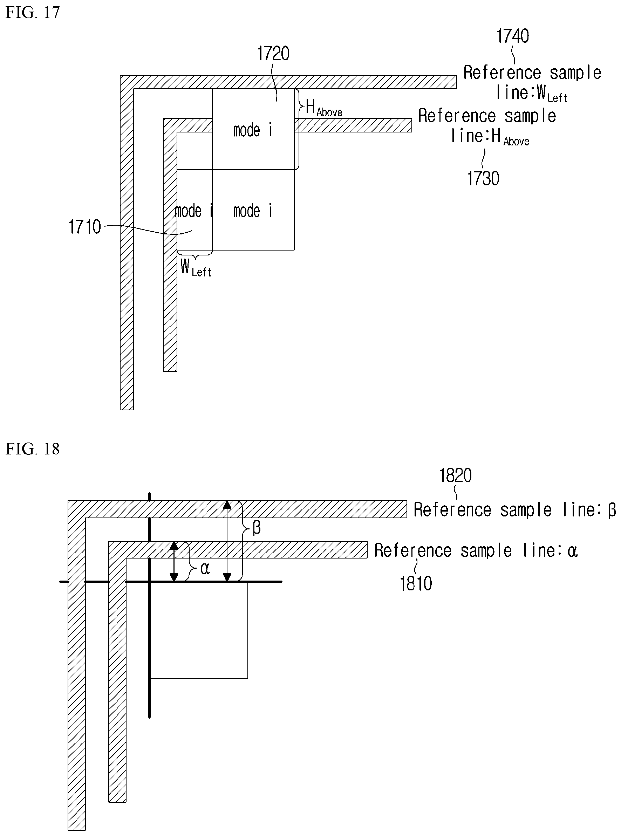

FIG. 17 is a diagram illustrating an example of a method of deriving a reference sample line according to the present disclosure. According to FIG. 17, when there are multiple previously reconstructed blocks having the same intra prediction mode as a current block, the image encoding apparatus 100 and the image decoding apparatus 200 may use a reference sample line separated from the current block by the smallest width or height among the widths or heights of the previously reconstructed blocks to generate a prediction block.

Specifically, when the intra prediction modes of the left-side previously reconstructed block 1710 and the above previously reconstructed block 1720 of the current block are the same as the intra prediction mode of the current block, the image encoding apparatus 100 and the image decoding apparatus 200 may compare the width $W_{Left}$ of the left-side previously reconstructed block 1710 and the height $H_{Above}$ of the above-side previously reconstructed block 1720. When $W_{Left} < H_{Above}$, the image encoding apparatus 100 and the image decoding apparatus 200 may generate the prediction block by using the reference sample line that is $W_{Left}$ away from the current block. On the other hand, when $W_{Left} > H_{Above}$, the image encoding apparatus 100 and the image decoding apparatus 200 may generate the prediction block by using the reference sample line that is $H_{Above}$ away from the current block.

## Embodiment 3

The present disclosure may relate to a method of obtaining weights for fusing a plurality of prediction blocks generated using a plurality of reference sample lines. At this time, the weights may be used or derived as values promised between the image encoding apparatus 100/the image decoding apparatus 200.

According to one embodiment of the present disclosure, the weights may be applied variably depending on the size of the current block. For example, when the width×height of the current block is less than or equal to a specific threshold value, the image encoding apparatus 100 and the image decoding apparatus 200 may apply a large weight to a prediction block generated using a reference sample line close to a current block. Alternatively, when the width×height of the current block is greater than a specific threshold value, the image encoding apparatus 100 and the image decoding apparatus 200 may apply a small weight to a prediction block generated using a reference sample line close to the current block. Here, the reference sample line close to the current block may mean a reference sample line close to the current block among a plurality of reference sample lines used when forming a plurality of prediction blocks.

According to another embodiment of the present disclosure, the image encoding apparatus 100 and the image decoding apparatus 200 may variably apply weights according to the intra prediction mode of the current block. For example, when the intra prediction mode of the current block is the planar mode or the DC mode, the image encoding apparatus 100 and the image decoding apparatus 200 may apply a large weight to a prediction block generated using a reference sample line close to the current block.

According to another embodiment of the present disclosure, the image encoding apparatus 100 and the image decoding apparatus 200 may variably apply weights according to the shape of the current block. For example, if the width of the current block is greater than or equal to the height, a first prediction block is generated based on a vertical prediction mode, and a second prediction block is generated based on a horizontal prediction mode, the image encoding apparatus 100 and the image decoding apparatus 200 may apply a large weight to the first prediction block.

Alternatively, if the width of the current block is smaller than the height, the first prediction block is generated based on a directional mode in a horizontal direction, and the second prediction block is generated based on a directional mode in a vertical direction, the image encoding apparatus 100 and the image decoding apparatus 200 may apply a large weight to the first prediction block.

Here, the directional mode in the vertical direction may include one of the intra prediction modes 34 to 66, and the directional prediction mode in the horizontal direction may include one of the intra prediction modes 2 to 33.

According to another embodiment of the present disclosure, when fusing a plurality of prediction blocks, the image encoding apparatus 100 and the image decoding apparatus 200 may fixedly apply weights regardless of neighboring information. The weights applied to various embodiments according to the present disclosure and Equations 3 to 6 above may have one of the values of 0, 1/4, 1/2, 3/4, and 1. Alternatively, the weights applied to various embodiments according to the present disclosure and to Equations 3 to 6 above may have one of the values of 0, 1/8, 1/4, 3/8, 1/2, 5/8, 3/4, 7/8, and 1.

FIG. 18 is a diagram illustrating an example of determining a weight applied when fusing a plurality of prediction blocks according to the present disclosure. According to FIG. 18, the weight may be applied based on a distance between a current block and a reference sample line without signaling. For example, if there is a reference sample line 1810 that is $\alpha$ away from the boundary of a current block and a reference sample line 1820 that is $\beta$ away from the boundary of the current block, the weight applied to each prediction block generated based on each reference sample line may be calculated using a ratio of $\alpha:\beta$ as in Equation 7 below.

[Equation 7]

$$\mathbf{Pred_{Final}} = \frac{\beta}{\alpha+\beta} \times \mathbf{Pred_{m,\alpha}} + \frac{\alpha}{\alpha+\beta} \times \mathbf{Pred_{n,\beta}}$$

That is, the weight applied to the prediction block Predm,$\alpha$ generated based on the reference sample line 1810 that is $\alpha$ away from the boundary of the current block may be $\beta/(\alpha+\beta)$. In addition, the weight applied to the prediction block Predn,$\beta$ generated based on the reference sample line 1820 that is $\beta$ away from the boundary of the current block may be $\alpha/(\alpha+\beta)$.

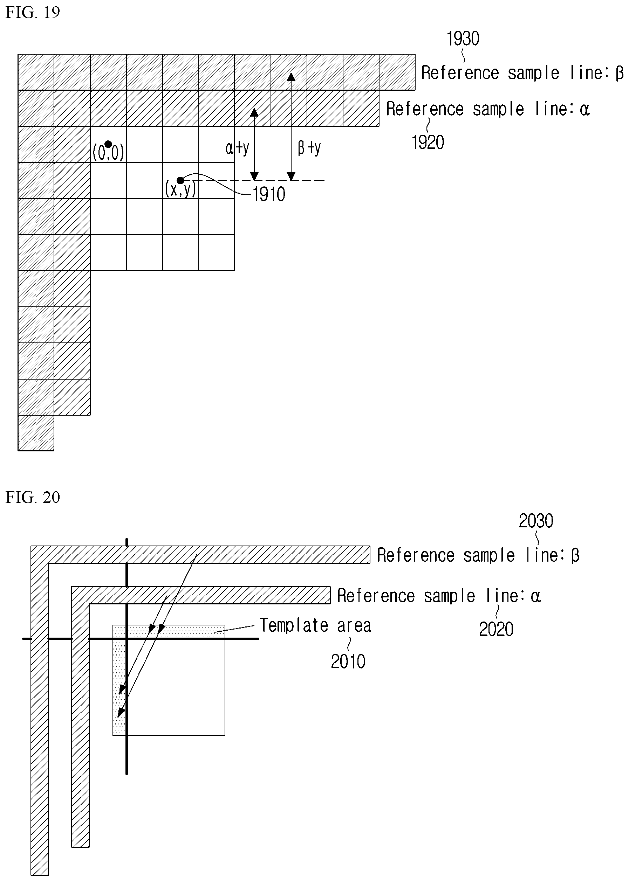

FIG. 19 is a diagram illustrating an example of determining a weight applied when fusing a plurality of prediction blocks according to the present disclosure. Referring to FIG. 19, a weight may be determined by a difference in distance between a position of a sample in a current block and a reference sample line. Specifically, when the position of a top-left sample of the current block is (0,0), the image encoding apparatus 100 and the image decoding apparatus 200 may obtain a weight using a ratio of $\alpha$+y: $\beta$+y (or $\alpha$+x: $\beta$+x) as in Equation 8 below for a prediction block generated using a reference sample line 1920 that is $\alpha$+y (or $\alpha$+x) away from a sample 1910 at a position (x, y) in the current block and a prediction block generated using a reference sample line 1930 that is $\beta$+y (or $\beta$+x) away from a sample 1910 at a position (x, y) in the current block.

[Equation 8]

$$\mathbf{Pred_{Final}} = \frac{\beta+y}{\alpha+\beta+2y} \times \mathbf{Pred}_{m,\alpha} + \frac{\alpha+y}{\alpha+\beta+2y} \times \mathbf{Pred}_{n,\beta}$$

$$\mathbf{Pred_{Final}} = \frac{\beta+x}{\alpha+\beta+2x} \times \mathbf{Pred}_{m,\alpha} + \frac{\alpha+x}{\alpha+\beta+2x} \times \mathbf{Pred}_{n,\beta}$$

That is, the weight applied to a prediction block $Pred_{m,\alpha}$ generated using the reference sample line 1920 that is $\alpha$+y away from the (x,y) sample 1910 in the current block may be $(\beta+y)/(\alpha+\beta+2y)$. In addition, the weight applied to the prediction block $Pred_{n,\beta}$ generated using the reference sample line 1930 that is $\beta$+y away from the (x,y) sample 1910 in the current block may be $(\alpha+y)/(\alpha+\beta+2y)$.

Alternatively, the weight applied to the prediction block $Pred_{m,\alpha}$ generated using the reference sample line 1920 that is $\alpha$+x away from the (x,y) sample 1910 in the current block may be $(\beta+x)/(\alpha+\beta+2x)$. Additionally, the weight applied to the prediction block $Pred_{n,\beta}$ generated using the reference sample line 1930 that is $\beta$+x away from the (x,y) sample 1910 in the current block may be $(\alpha+x)/(\alpha+\beta+2x)$.

FIG. 20 is a diagram illustrating an example of determining a weight applied when fusing a plurality of prediction blocks according to the present disclosure. Referring to FIG. 20, the image encoding apparatus 100 and the image decoding apparatus 200 may obtain a SAD (sum of absolute difference) between a prediction sample and a reconstructed sample in a template area 2010 predicted by a reference sample line $\alpha$ 2020. In addition, the image encoding apparatus 100 and the image decoding apparatus 200 may obtain the SAD between the prediction sample and the reconstructed sample in the template area 2010 predicted by a reference sample line $\beta$ 2030.

When the template costs obtained by each SAD are $Cost_\alpha$ and $Cost_\beta$, respectively, the image encoding apparatus 100 and the image decoding apparatus 200 may obtain weights using a ratio of $Cost_\alpha:Cost_\beta$. At this time, the present disclosure may use one of SATD or SSD (Sum of square difference) instead of SAD to obtain the weights. A final prediction sample according to the present disclosure may be calculated using Equation 9 below.

[Equation 9]

$$\mathbf{Pred_{Final}} = \frac{cost_\beta}{cost_\alpha+cost_\beta} \times \mathbf{PredA} + \frac{cost_\alpha}{cost_\alpha+cost_\beta} \times \mathbf{PredB}$$

According to Equation 9, the weight applied to the prediction block PredA generated using the reference sample line $\alpha$ 2020 may be $Cost\beta/(Cost\alpha+Cost\beta)$. In addition, the weight applied to the prediction block PredB generated using the reference sample line $\beta$ 2030 may be $Cost\alpha/(Cost\alpha+Cost\beta)$. In other words, a higher weight may be applied to a prediction block having a smaller template cost.

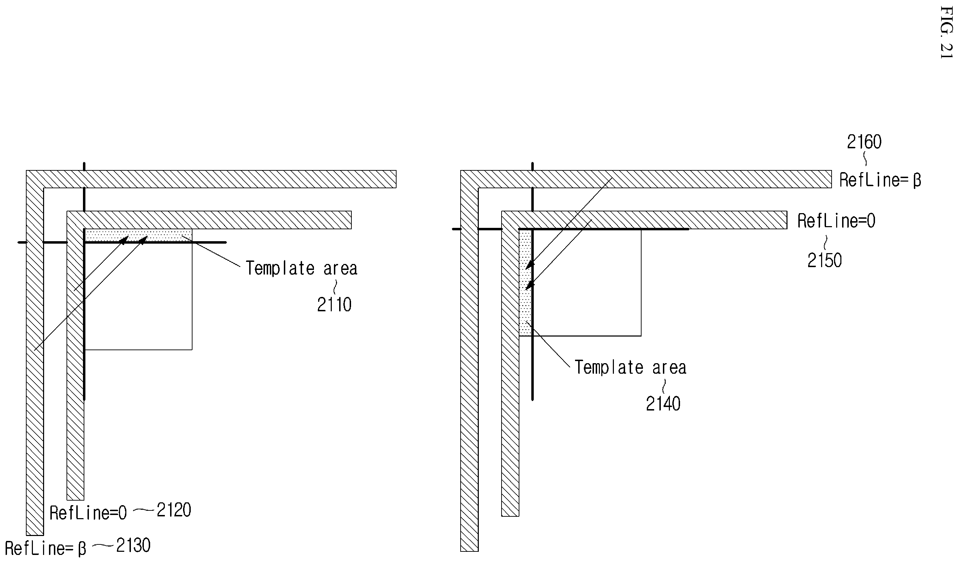

FIG. 21 is a diagram illustrating an example of determining a weight applied when fusing a plurality of prediction blocks according to the present disclosure. According to FIG. 21, in order to obtain a template cost in a template area using reference sample line 0 2120 and 2150, the image encoding apparatus 100 and the image decoding apparatus 200 may use only a top template area 2110 or a left template area 2140, and may generate the template cost using the template and the previously reconstructed reference sample adjacent to the current block.

For example, when the intra prediction mode of the current block is intra prediction mode 2 to 18, the image encoding apparatus 100 and the image decoding apparatus 200 may generate a prediction sample in the top template area by using reference sample line 0 (RefLine=0) 2120 and then obtain $Cost_0$. In addition, the image encoding apparatus 100 and the image decoding apparatus 200 may generate a prediction sample in the same template area by using reference sample line $\beta$ (RefLine=$\beta$) 2130 and then obtain $Cost_\beta$. The image encoding apparatus 100 and the image decoding apparatus 200 may generate a final prediction block by applying $Cost_0$ and $Cost_\beta$ to Equation 9.

As another example, when the intra prediction mode of the current block is intra prediction mode 50 to 66, the image encoding apparatus 100 and the image decoding apparatus 200 may generate a prediction sample in the left template area by using reference sample line 0 (RefLine=0) 2150 and then obtain $Cost_0$. In addition, the image encoding apparatus 100 and the image decoding apparatus 200 may generate a prediction sample in the same template area by using reference sample line $\beta$ (RefLine=$\beta$) 2160 and then obtain $Cost_\beta$. The image encoding apparatus 100 and the image decoding apparatus 200 may generate a final prediction block by applying $Cost_0$ and $Cost_\beta$ to Equation 9.

According to another embodiment of the present disclosure, prediction samples in a template area predicted using reference sample line $\alpha$ and reference sample line $\beta$ may be fused by applying weights defined as in Table 3 below. Thereafter, the image encoding apparatus 100 and the image decoding apparatus 200 may obtain the SAD with the reconstructed sample in the template area. That is, the image encoding apparatus 100 and the image decoding apparatus 200 may obtain the SAD with the refused prediction samples and reconstructed samples based on Table 3.

The image encoding apparatus 100 and the image decoding apparatus 200 may use the weight having the lowest SAD as the weight for predicting the final prediction block. That is, the weight having the lowest SAD among the weights used to fuse the prediction samples in the template area may be used as the weight for predicting the final prediction block. The weights in Table 3 below may be defined identically between the image encoding apparatus 100 and the image decoding apparatus 200.

[Table 3]

| Index | Weight |
|-------|--------|
| 0 | 1/4 |
| 1 | 1/2 |
| 2 | 3/4 |
| ... | ... |

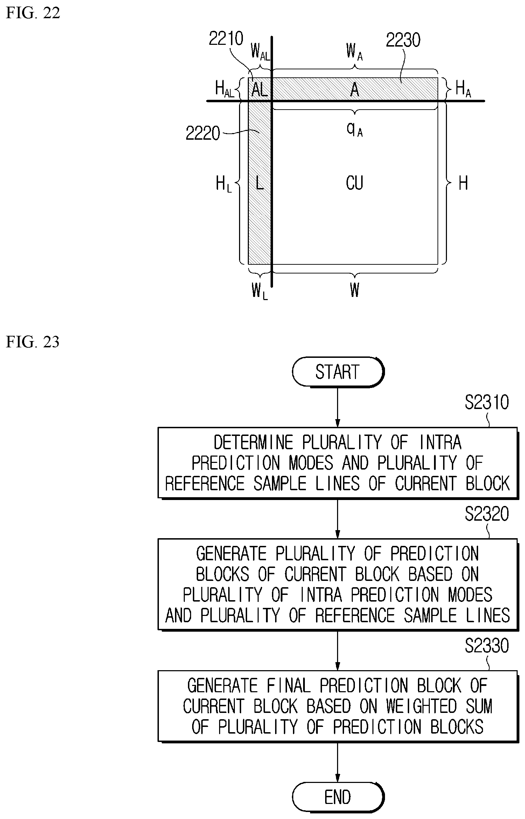

FIG. 22 is a drawing illustrating a template area for obtaining a template cost according to the present disclosure. Referring to FIG. 22, the template area according to the present disclosure may be divided into an above-left 'AL' area 2210, a left 'L' area 2220, and an above 'A' area 2230 of a current block. The areas 'A' 2230, 'L' 2220, and 'AL' 2210 may all be used to obtain the template cost, or may be partially used.

Here, the width $W_A$ of the area 'A' ($W_A \times H_A$) 2230 may be equal to or different from the width W of the current block, and the height $H_A$ may be greater than or equal to 1. In addition, the height $H_L$ of the area 'L' ($W_L \times H_L$) 2220 may be equal to or different from the height H of the current block, and the width $W_L$ may be greater than or equal to 1. In addition, the $W_{AL}$ of the area 'AL' ($W_{AL} \times H_{AL}$) 2210 may be greater than or equal to 1, and the $W_{AL}$ may be equal to or different from $H_A$. In addition, $H_{AL}$ of the area 'AL' may be greater than or equal to 1, and $H_{AL}$ may be equal to or different from $W_L$.

FIG. 23 is a flowchart of an image encoding method according to the present disclosure. The image encoding apparatus 100 may determine a plurality of intra prediction modes and a plurality of reference sample lines of a current block (S2310). The image encoding apparatus 100 may generate a plurality of prediction blocks of the current block based on the plurality of intra prediction modes and the plurality of reference sample lines (S2320). At this time, the plurality of intra prediction modes may include a first intra prediction mode and a second intra prediction mode. In addition, the plurality of reference sample lines may include a first reference sample line and a second reference sample line. A first prediction block may be generated based on the first intra prediction mode and the first reference sample line, and a second prediction block may be generated based on the second intra prediction mode and the second reference sample line.

The image encoding apparatus 100 may generate a final prediction block of the current block based on a weighted sum of the plurality of prediction blocks (S2330). For example, the final prediction block of the current block may be generated by a weighted sum of the first prediction block and the second prediction block.

According to one embodiment of the present disclosure, at least one of the first intra prediction mode, the second intra prediction mode, information indicating the first reference sample line, or information indicating the second reference sample line may be encoded into a bitstream. At this time, the information indicating the first reference sample line may be mrl_idx, and the information indicating the second reference sample line may be mrl_idx2. Alternatively, the information indicating the first reference sample line may be intra_luma_ref_idx, and the information indicating the second reference sample line may be intra_luma_ref_idx2.

According to another embodiment of the present disclosure, if the information indicating a second intra prediction mode among a plurality of intra prediction modes is not obtained from a bitstream, the second prediction mode may be derived to be one of a predetermined mode or an MPM candidate mode. Here, the predetermined mode may be a planar mode or a DC mode. In addition, the MPM candidate mode may be configured as an intra prediction mode of a neighboring block of the current block.

According to one embodiment of the present disclosure, if the intra prediction mode of the current block and the intra prediction mode of the neighboring block are the same, a second reference sample line among the plurality of reference sample lines may be determined based on the size of the neighboring block. For example, if the intra prediction mode of the current block and the intra prediction mode of the above neighboring block are the same, the second reference sample line may be determined to be a reference sample line separated from the current block by the height of the above neighboring block. Alternatively, if the intra prediction mode of the current block and the intra prediction mode of the left neighboring block are the same, the second reference sample line may be determined to be a reference sample line separated from the current block by the width of the left neighboring block. In this case, the first reference sample line may be determined to be reference sample line 0. Reference sample line 0 may mean a first neighboring reference sample line that is closest to the current block.

According to another embodiment of the present disclosure, if there are two or more neighboring blocks having the same intra prediction mode as the intra prediction mode of the current block, a second reference sample line among the plurality of reference sample lines may be determined based on the width and height of the neighboring blocks. For example, if the neighboring blocks include a left neighboring block and an above neighboring block, and the width of the left neighboring block is less than or equal to the height of the above neighboring block, the second reference sample line may be determined to be a reference sample line separated from the current block by the width of the left neighboring block.

Alternatively, if the neighboring blocks include a left neighboring block and an above neighboring block, and the width of the left neighboring block is greater than the height of the above neighboring block, the second reference sample line may be determined to be a reference sample line separated from the current block by the height of the above neighboring block.

According to one embodiment of the present disclosure, the weights used for fusion of the prediction blocks may be determined based on at least one of the size of the current block, the shape of the current block, the intra prediction mode of the current block, the distance between the current block and the reference sample line, and a template matching-based cost.

For example, if the first reference sample line is located closer to the current block than the second reference sample line, a first weight applied to the first prediction block may be smaller than a second weight applied to the second prediction block based on the size of the current block being greater than or equal to a threshold value. Alternatively, the first weight may be greater than the second weight based on the size of the current block being smaller than the threshold value. In other words, the weight may be determined based on the size of the current block. In this case, the threshold value may be determined by an agreement between the image encoding apparatus 100/the image decoding apparatus 200, and may also be derived from other information.

As another example, if the first reference sample line is located closer to the current block than the second reference sample line, the first weight applied to the first prediction block may be greater than the second weight applied to the second prediction block based on the intra prediction mode of the current block being the DC mode or the planar mode. That is, the weight may be determined based on the intra prediction mode of the current block.

As another example, if the first prediction block is generated using a directional mode in a vertical direction and the second prediction block is generated using a directional prediction mode in a horizontal direction, the first weight applied to the first prediction block may be greater than the second weight applied to the second prediction block based on the width of the current block being greater than or equal to the height of the current block. Alternatively, the first weight may be less than the second weight based on the width of the current block being less than the height of the current block. In other words, the weight may be determined based on the shape of the current block.

Here, the directional mode in the vertical direction may be one of intra prediction modes 34 to 66. Additionally, the directional prediction mode in the horizontal direction may be one of intra prediction modes 2 to 33.

As another example, the weights used to fuse the first prediction block and the second prediction block may be determined based on a distance between the position of the sample included in the current block and the reference sample line. Specifically, the weights may be determined based on the ratio of the distance from the position of the sample in the current block to the first reference sample line and the distance from the position of the sample in the current block to the second reference sample line.

As another example, the weight used to fuse the first prediction block and the second prediction block may be determined based on the distance from the current block to the reference sample line. Specifically, the weights may be determined based on a ratio of the distance from the current block to the first reference sample line and the distance from the current block to the second reference sample line.

As another example, the weight may be determined based on a template matching-based cost. In this case, the template matching-based cost may include a first template cost calculated based on a first reference sample line and a second template cost calculated based on a second reference sample line.

The weight according to the present disclosure may be determined based on a comparison of the first template cost and the second template cost. Specifically, the weight may be determined as a ratio of the first template cost and the second template cost. In this case, a larger weight may be applied to a prediction block having a smaller template cost.

Here, the first template cost may be calculated based on one of SAD, SATD or SSD of the prediction sample and the reconstructed sample in the template area generated based on the first reference sample line. Additionally, the second template cost may be calculated based on one of SAD, SATD or SSD of the prediction sample and the reconstructed sample in the template area generated based on the second reference sample line.

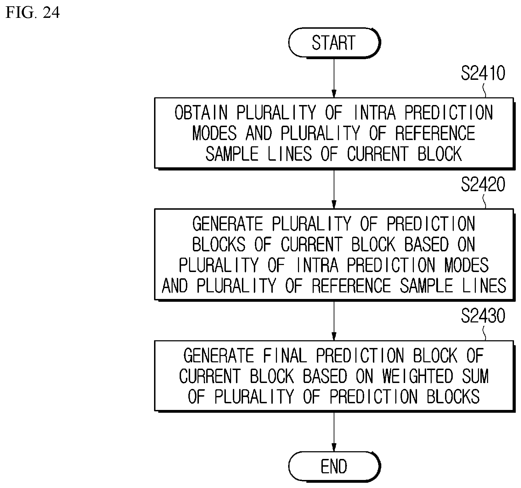

FIG. 24 is a flowchart of an image decoding method according to the present disclosure. The image decoding apparatus 200 may obtain a plurality of intra prediction modes and a plurality of reference sample lines of a current block (S2410). The image decoding apparatus 200 may generate a plurality of prediction blocks of the current block based on the plurality of intra prediction modes and the plurality of reference sample lines (S2420). At this time, the plurality of intra prediction modes may include a first intra prediction mode and a second intra prediction mode. In addition, the plurality of reference sample lines may include a first reference sample line and a second reference sample line. A first prediction block may be generated based on the first intra prediction mode and the first reference sample line, and a second prediction block may be generated based on the second intra prediction mode and the second reference sample line.

The image decoding apparatus 200 may generate a final prediction block of the current block based on a weighted sum of the plurality of prediction blocks (S2430). For example, the final prediction block of the current block may be generated by a weighted sum of the first prediction block and the second prediction block.

The image decoding process by the image decoding apparatus 200 according to the present disclosure may be the same as the encoding process by the image encoding apparatus 100 according to the description of FIG. 23.

While the exemplary methods of the present disclosure described above are represented as a series of operations for clarity of description, it is not intended to limit the order in which the steps are performed, and the steps may be performed simultaneously or in different order as necessary. In order to implement the method according to the present disclosure, the described steps may further include other steps, may include remaining steps except for some of the steps, or may include other additional steps except for some steps.

In the present disclosure, the image encoding apparatus 100 or the image decoding apparatus 200 that performs a predetermined operation (step) may perform an operation (step) of confirming an execution condition or situation of the corresponding operation (step). For example, if it is described that predetermined operation is performed when a predetermined condition is satisfied, the image encoding apparatus 100 or the image decoding apparatus 200 may perform the predetermined operation after determining whether the predetermined condition is satisfied.

The various embodiments of the present disclosure are not a list of all possible combinations and are intended to describe representative aspects of the present disclosure, and the matters described in the various embodiments may be applied independently or in combination of two or more.

Various embodiments of the present disclosure may be implemented in hardware, firmware, software, or a combination thereof. In the case of implementing the present disclosure by hardware, the present disclosure can be implemented with application specific integrated circuits (ASICs), Digital signal processors (DSPs), digital signal processing devices (DSPDs), programmable logic devices (PLDs), field programmable gate arrays (FPGAs), general processors, controllers, microcontrollers, microprocessors, etc.

In addition, the image decoding apparatus 200 and the image encoding apparatus 100, to which the embodiments of the present disclosure are applied, may be included in a multimedia broadcasting transmission and reception device, a mobile communication terminal, a home cinema video device, a digital cinema video device, a surveillance camera, a video chat device, a real time communication device such as video communication, a mobile streaming device, a storage medium, a camcorder, a video on demand (VoD) service providing device, an OTT video (over the top video) device, an Internet streaming service providing device, a three-dimensional (3D) video device, a video telephony video device, a medical video device, and the like, and may be used to process video signals or data signals. For example, the OTT video devices may include a game console, a blu-ray player, an Internet access TV, a home theater system, a smartphone, a tablet PC, a digital video recorder (DVR), or the like.

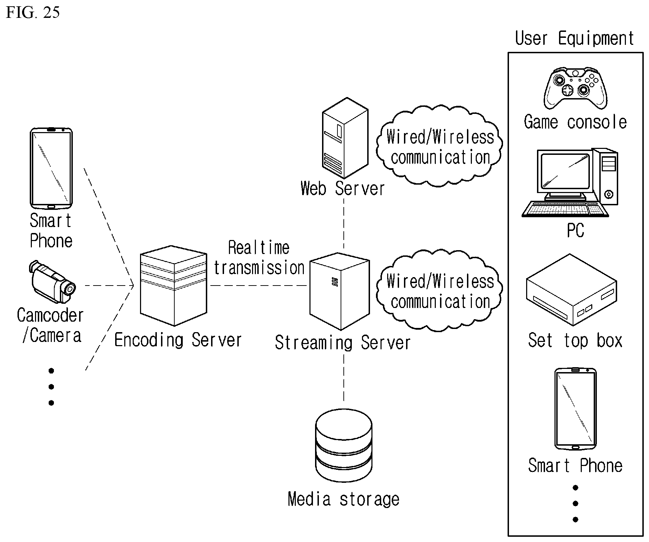

FIG. 25 is a view showing a content streaming system, to which an embodiment of the present disclosure is applicable.

As shown in FIG. 25, the content streaming system, to which the embodiment of the present disclosure is applied, may largely include an encoding server, a streaming server, a web server, a media storage, a user device, and a multimedia input device.

The encoding server compresses content input from multimedia input devices such as a smartphone, a camera, a camcorder, etc. into digital data to generate a bitstream and transmits the bitstream to the streaming server. As another example, when the multimedia input devices such as smartphones, cameras, camcorders, etc. directly generate a bitstream, the encoding server may be omitted.

The bitstream may be generated by an image encoding method or an image encoding apparatus 100, to which the embodiment of the present disclosure is applied, and the streaming server may temporarily store the bitstream in the process of transmitting or receiving the bitstream.

The streaming server transmits the multimedia data to the user device based on a user's request through the web server, and the web server serves as a medium for informing the user of a service. When the user requests a desired service from the web server, the web server may deliver it to a streaming server, and the streaming server may transmit multimedia data to the user. In this case, the content streaming system may include a separate control server. In this case, the control server serves to control a command/response between devices in the content streaming system.

The streaming server may receive content from a media storage and/or an encoding server. For example, when the content are received from the encoding server, the content may be received in real time. In this case, in order to provide a smooth streaming service, the streaming server may store the bitstream for a predetermined time.

Examples of the user device may include a mobile phone, a smartphone, a laptop computer, a digital broadcasting terminal, a personal digital assistant (PDA), a portable multimedia player (PMP), navigation, a slate PC, tablet PCs, ultrabooks, wearable devices (e.g., smartwatches, smart glasses, head mounted displays), digital TVs, desktops computer, digital signage, and the like.

Each server in the content streaming system may be operated as a distributed server, in which case data received from each server may be distributed.

The scope of the disclosure includes software or machine-executable commands (e.g., an operating system, an application, firmware, a program, etc.) for enabling operations according to the methods of various embodiments to be executed on an apparatus or a computer, a non-transitory computer-readable medium having such software or commands stored thereon and executable on the apparatus or the computer.

**Industrial Applicability**

The embodiments of the present disclosure may be used to encode or decode an image.

**Claims**

1. An image decoding method performed by an image decoding apparatus, the image decoding method comprising:

   obtaining a plurality of intra prediction modes and a plurality of reference sample lines of a current block;
   generating a plurality of prediction blocks of the current block based on the plurality of intra prediction modes and the plurality of reference sample lines; and
   generating a final prediction block of the current block based on a weighted sum of the plurality of prediction blocks.

2. The image decoding method of claim 1, wherein the second prediction mode is derived to be one of a predetermined mode or a most probable mode (MPM) candidate mode, based on information indicating a second intra prediction mode of the plurality of intra prediction modes being not obtained from a bitstream.

3. The image decoding method of claim 1, wherein based on an intra prediction mode of the current block and an intra prediction mode of a neighboring block, a second reference sample line among the plurality of reference sample lines is determined based on a size of the neighboring block.

4. The image decoding method of claim 1, wherein based on there being two or more neighboring blocks having the same intra prediction mode as an intra prediction mode of the current block, a second reference sample line among the plurality of reference sample lines is determined based on widths and heights of the neighboring blocks.

5. The image decoding method of claim 4,
   wherein the neighboring blocks include a left neighboring block and an above neighboring block,

   wherein based on a width of the left neighboring block being less than or equal to a height of the above neighboring block, the second reference sample line is determined to be a reference sample line separated from the current block by a width of the left neighboring block, and
   wherein based on the width of the left neighboring block being greater than the height of the above neighboring block, the second reference sample line is determined to be a reference sample line separated from the current block by the height of the above neighboring block.

6. The image decoding method of claim 1, wherein the weight is determined based on at least one of a size of the current block, a shape of the current block, an intra prediction mode of the current block, a distance between the current block and a reference sample line or a template matching-based cost.

7. The image decoding method of claim 6,

   wherein the plurality of prediction blocks includes a first prediction block generated based on a first reference sample line and a second prediction block generated based on a second reference sample line,
wherein the first reference sample line is located closer to the current block than the second reference sample line, and
wherein a first weight applied to the first prediction block is less than a second weight applied to the second prediction block based on a size of the current block being greater than or equal to a threshold value and is greater than the second weight based on the size of the current block being less than the threshold value.

8. The image decoding method of claim 6,

wherein the plurality of prediction blocks includes a first prediction block generated based on a first reference sample line and a second prediction block generated based on a second reference sample line,
wherein the first reference sample line is located closer to the current block than the second reference sample line, and
wherein a first weight applied to the first prediction block is greater than a second weight applied to the second prediction block, based on an intra prediction mode of the current block being a DC mode or a planar mode.

9. The image decoding method of claim 6,

wherein the plurality of prediction blocks includes a first prediction block generated using a directional prediction mode in a vertical direction and a second prediction block generated using a directional prediction mode in a horizontal direction, and
wherein a first weight applied to the first prediction block is greater than a second weight applied to the second prediction block based on a width of the current block being greater than or equal to a height of the current block and is less than the second weight based on the width of the current block being less than the height of the current block.

10. The image decoding method of claim 6, wherein the weight is determined based on a distance between a position of a sample included in the current block and the reference sample line.

11. The image decoding method of claim 6,

wherein the template matching-based cost includes a first template cost calculated based on the first sample line and a second template cost calculated based on the second reference sample line, and
wherein the weight is determined based on comparison of the first template cost and the second template cost.

12. An image encoding method performed by an image encoding apparatus, the image encoding method comprising:

obtaining a plurality of intra prediction modes and a plurality of reference sample lines of a current block;
generating a plurality of prediction blocks of the current block based on the plurality of intra prediction modes and the plurality of reference sample lines; and
generating a final prediction block of the current block based on a weighted sum of the plurality of prediction blocks.

13. A computer-readable recording medium storing a bitstream generated by the image encoding method of claim 12.

14. A method of transmitting a bitstream generated by an image encoding method, the image encoding method comprising:

obtaining a plurality of intra prediction modes and a plurality of reference sample lines of a current block;
generating a plurality of prediction blocks of the current block based on the plurality of intra prediction modes and the plurality of reference sample lines; and
generating a final prediction block of the current block based on a weighted sum of the plurality of prediction blocks.

FIG. 1

FIG. 2

FIG. 3

FIG. 4

```
              ┌──────────┐
              │  START   │
              └──────────┘
                    │
                    ▼                            S410
┌──────────────────────────────────────────┐
│      PERFORM PREDICTION (DETERMINE         │
│    INTRA PREDICTION MODE/TYPE, DERIVE      │
│       NEIGHBORING REFERENCE SAMPLES,       │
│    AND GENERATE PREDICTION SAMPLES)        │
└──────────────────────────────────────────┘
                    │
                    ▼                            S420
┌──────────────────────────────────────────┐
│    RESIDUAL PROCESSING (DERIVE RESIDUAL    │
│  SAMPLES ON BASIS OF PREDICTION SAMPLES)   │
└──────────────────────────────────────────┘
                    │
                    ▼                            S430
┌──────────────────────────────────────────┐
│      ENCODE IMAGE/VIDEO INFORMATION        │
│     INCLUDING PREDICTION INFORMATION       │
│          AND RESIDUAL INFORMATION          │
└──────────────────────────────────────────┘
                    │
                    ▼
              ┌──────────┐
              │   END    │
              └──────────┘
```

FIG. 5

```
                                          185
                                           │
           ┌──────────────────────────────────────────┐
           │                                  186       │
           │               ┌─────────────────────┐     │
           │               │  INTRA PREDICTION    │     │
ORIGINAL PICTURE ─────────▶│     MODE/TYPE        │     │──▶ INTRA PREDICTION
           │               │ DETERMINATION UNIT   │     │   MODE/TYPE INFORMATION
           │               └─────────────────────┘     │
           │                                  187       │
           │               ┌─────────────────────┐     │
           │               │  REFERENCE SAMPLE    │     │
RECONSTRUCTED REFERENCE ──▶│   DERIVATION UNIT    │     │
REGION IN CURRENT PICTURE  └─────────────────────┘     │──▶ PREDICTION SAMPLE(S)
           │                                  188       │
           │               ┌─────────────────────┐     │
           │               │  PREDICTION SAMPLE   │     │
           │               │   DERIVATION UNIT    │     │
           │               └─────────────────────┘     │
           └──────────────────────────────────────────┘
                      INTRA PREDICTION UNIT
```

FIG. 6

```
                              ┌──────────┐
                              │  START   │
                              └────┬─────┘
                                   │              S610
                   ┌───────────────▼────────────────┐
                   │ DETERMINE INTRA PREDICTION MODE/TYPE │
                   │   FOR CURRENT BLOCK ON BASIS OF      │
                   │   RECEIVED PREDICTION INFORMATION    │
                   └───────────────┬────────────────┘
                                   │              S620
                   ┌───────────────▼────────────────┐
                   │ DERIVE NEIGHBORING REFERENCE SAMPLES │
                   └───────────────┬────────────────┘
                                   │              S630
                   ┌───────────────▼────────────────┐
                   │        PERFORM PREDICTION       │
                   │    (GENERATE PREDICTION SAMPLES) │
                   └───────────────┬────────────────┘
                                   │              S640
                   ┌───────────────▼────────────────┐
                   │     DERIVE RESIDUAL SAMPLES ON   │
                   │    BASIS OF RESIDUAL INFORMATION  │
                   └───────────────┬────────────────┘
                                   │              S650
                   ┌───────────────▼────────────────┐
                   │       GENERATE RECONSTRUCTED     │
                   │  BLOCK/PICTURE ON BASIS OF PREDICTION │
                   │    SAMPLES AND RESIDUAL SAMPLES   │
                   └───────────────┬────────────────┘
                                   │
                              ┌────▼─────┐
                              │   END    │
                              └──────────┘
```

FIG. 7

INTRA PREDICTOR

FIG. 8

FIG. 9

FIG. 10

FIG. 11

1120

Reference sample line: β

Reference sample line: α

1110

FIG. 12

START

S1210

SIGNAL FIRST INTRA
PREDICTION MODE AND mrl_idx

S1220

SIGNAL SECOND INTRA
PREDICTION MODE AND mrl_idx2

S1230

FUSE INTRA PREDICTION BLOCKS

END

FIG. 13

```
        ┌──────────────┐
        │    START     │
        └──────────────┘
                │
                ▼                        S1310
┌───────────────────────────────────┐
│   SIGNAL FIRST INTRA PREDICTION    │
│    MODE, mrl_idx AND mrl_idx2      │
└───────────────────────────────────┘
                │
                ▼                        S1320
┌───────────────────────────────────┐
│  SIGNAL SECOND INTRA PREDICTION MODE │
└───────────────────────────────────┘
                │
                ▼                        S1330
┌───────────────────────────────────┐
│     FUSE INTRA PREDICTION BLOCKS   │
└───────────────────────────────────┘
                │
                ▼
        ┌──────────────┐
        │     END      │
        └──────────────┘
```

FIG. 14

mode i

$H_{Above}$

mode i

1410

1420

Reference sample
line:$H_{Above}$

1440

Reference sample
line:$W_{Left}$

mode i mode i

1430

$W_{Left}$

EP 4 580 186 A1

FIG. 15

Reference sample line:$W_{Left}$

Reference sample line:0

1560

1550

mode i

mode i

$W_{Left}$

1540

Reference sample line:$H_{Above}$

Reference sample line:0

1530

1520

1510

$H_{Above}$

mode i

mode i

FIG. 16

FIG. 17

1720

1740

Reference sample
line:$W_{Left}$

$H_{Above}$

mode i

Reference sample
line:$H_{Above}$

1730

1710

mode i    mode i

$W_{Left}$

FIG. 18

1820

Reference sample line: β

β

α

Reference sample line: α

1810

FIG. 19

FIG. 20

FIG. 21

FIG. 22

FIG. 23

FIG. 24

START

S2410

OBTAIN PLURALITY OF INTRA PREDICTION
MODES AND PLURALITY OF REFERENCE
SAMPLE LINES OF CURRENT BLOCK

S2420

GENERATE PLURALITY OF PREDICTION
BLOCKS OF CURRENT BLOCK BASED ON
PLURALITY OF INTRA PREDICTION MODES
AND PLURALITY OF REFERENCE SAMPLE LINES

S2430

GENERATE FINAL PREDICTION BLOCK OF
CURRENT BLOCK BASED ON WEIGHTED SUM
OF PLURALITY OF PREDICTION BLOCKS

END

FIG. 25

## INTERNATIONAL SEARCH REPORT

| International application No. |
| --- |
| **PCT/KR2023/012625** |

| | |
| --- | --- |
| **A.** | **CLASSIFICATION OF SUBJECT MATTER** |
| | **H04N 19/593**(2014.01)i; **H04N 19/11**(2014.01)i; **H04N 19/132**(2014.01)i; **H04N 19/176**(2014.01)i; **H04N 19/70**(2014.01)i |

According to International Patent Classification (IPC) or to both national classification and IPC

| | |
| --- | --- |
| **B.** | **FIELDS SEARCHED** |

Minimum documentation searched (classification system followed by classification symbols)

H04N 19/593(2014.01); H04N 19/103(2014.01); H04N 19/105(2014.01); H04N 19/11(2014.01); H04N 19/122(2014.01); H04N 19/176(2014.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 복호화(decoding), 인트라(intra), 예측(prediction), 참조(reference), 라인(line), 가중(weight), MPM(most probable mode)

| | |
| --- | --- |
| **C.** | **DOCUMENTS CONSIDERED TO BE RELEVANT** |

| Category* | Citation of document, with indication, where appropriate, of the relevant passages | Relevant to claim No. |
| --- | --- | --- |
| Y | KR 10-2435675 B1 (ELECTRONICS AND TELECOMMUNICATIONS RESEARCH INSTITUTE) 24 August 2022 (2022-08-24)<br>See paragraphs [0003]-[0004], [0064], [0075], [0237], [0280], [0308] and [0420]; and claims 1 and 5. | 1-14 |
| Y | XU, Luhang et al. Non-EE2: Combination of JVET-AA0120 and JVET-AA0137. JVET-AA0246-v1, Joint Video Experts Team (JVET) of ITU-T SG 16 WP 3 and ISO/IEC JTC 1/SC 29, 27th Meeting, by teleconference. pp. 1-4, 18 July 2022.<br>See pages 1-2; and figures 1-2. | 1-14 |
| Y | KR 10-2021-0091322 A (HUAWEI TECHNOLOGIES CO., LTD.) 21 July 2021 (2021-07-21)<br>See paragraphs [0009]-[0010] and [0374]; and claim 1. | 7-9 |
| Y | CAO, Keming et al. EE2-related: Fusion for template-based intra mode derivation. JVET-W0123-v2, Joint Video Experts Team (JVET) of ITU-T SG 16 WP 3 and ISO/IEC JTC 1/SC 29, 23rd Meeting, by teleconference. pp. 1-4, 07 July 2021.<br>See pages 1-2. | 11 |

| | | | |
| --- | --- | --- | --- |
| ✓ Further documents are listed in the continuation of Box C. | | ✓ See patent family annex. | |

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **30 November 2023** | **30 November 2023** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

| | International application No. |
|---|---|
| | **PCT/KR2023/012625** |

**C.    DOCUMENTS CONSIDERED TO BE RELEVANT**

| Category* | Citation of document, with indication, where appropriate, of the relevant passages | Relevant to claim No. |
|---|---|---|
| A | US 2022-0217331 A1 (MICROSOFT TECHNOLOGY LICENSING, LLC) 07 July 2022 (2022-07-07) See claims 73-80. | 1-14 |

Form PCT/ISA/210 (second sheet) (July 2022)

**INTERNATIONAL SEARCH REPORT**
Information on patent family members

International application No.

**PCT/KR2023/012625**

| Patent document cited in search report | | | Publication date (day/month/year) | Patent family member(s) | | | Publication date (day/month/year) |
|---|---|---|---|---|---|---|---|
| KR | 10-2435675 | B1 | 24 August 2022 | CN | 109792515 | A | 21 May 2019 |
| | | | | KR | 10-2018-0014674 | A | 09 February 2018 |
| | | | | WO | 2018-026148 | A1 | 08 February 2018 |
| KR | 10-2021-0091322 | A | 21 July 2021 | CN | 114885158 | A | 09 August 2022 |
| | | | | CN | 114885159 | A | 09 August 2022 |
| | | | | EP | 3881549 | A1 | 22 September 2021 |
| | | | | JP | 2022-514885 | A | 16 February 2022 |
| | | | | JP | 2023-100834 | A | 19 July 2023 |
| | | | | JP | 7277586 | B2 | 19 May 2023 |
| | | | | US | 2022-0124368 | A1 | 21 April 2022 |
| | | | | WO | 2020-130889 | A1 | 25 June 2020 |
| US | 2022-0217331 | A1 | 07 July 2022 | CN | 109076241 | A | 21 December 2018 |
| | | | | CN | 109076241 | B | 23 June 2023 |
| | | | | EP | 3453180 | A1 | 13 March 2019 |
| | | | | US | 11323693 | B2 | 03 May 2022 |
| | | | | US | 11758127 | B2 | 12 September 2023 |
| | | | | US | 2020-0359017 | A1 | 12 November 2020 |
| | | | | US | 2020-0359018 | A1 | 12 November 2020 |
| | | | | WO | 2017-190288 | A1 | 09 November 2017 |

Form PCT/ISA/210 (patent family annex) (July 2022)